# EUROPEAN PATENT APPLICATION

(11) **EP 4 786 540 A1**
(43) Date of publication of application: **05.08.2026**
(21) Application number: 24872396.7
(22) Date of filing: 26.09.2024
(51) Int. Cl.: C08L 15/00, B60C 1/00, C08C 19/25, C08F 36/04, C08J 3/20, C08K 3/013, C08L 101/00

(54) **POLYMER COMPOSITION AND METHOD FOR PRODUCING SAME, FORMULATION, CROSSLINKED PRODUCT, AND TIRE**

(30) Priority: 29.09.2023 JP 2023170352
(71) Applicant: ENEOS Materials Corporation, Tokyo 105-7109 (JP)
(72) Inventor: WATANABE, Keisuke, Tokyo 105-7109 (JP); NAKAMORI, Harutaka, Tokyo 105-7109 (JP); HATANO, Suguru, Tokyo 105-7109 (JP); MATSUMOTO, Takaomi, Tokyo 105-7109 (JP)
(74) Representative: TBK
(86) International application number: PCT/JP2024/034426
(87) International publication number: WO 2025/070611

(57) **Abstract**

A polymer composition contains a modified conjugated diene-based polymer and an acid component and, includes a non-ionic surfactant and/or an extender oil as an optional component. The acid component is an acid or a metal salt of an acid or both. The acid component content, with respect to 100 parts by mass of the modified conjugated diene-based polymer, is 0.1 to 20 parts by mass. The total amount of the modified conjugated diene-based polymer, the acid component, the non-ionic surfactant, and the extender oil, with respect to the entire composition, is 95 mass% or more. The modified conjugated diene-based polymer has a partial structure derived from a compound (M) having a nitrogen-containing group and two or more hydrocarbyloxysilyl groups.

## Description

### Technical Field

### [Cross-Reference to Related Applications]

The present application claims a priority from Japanese Patent Application No. 2023-170352 filed on September 29, 2023, the entirety of the disclosure of which is incorporated herein by reference.

The present disclosure relates to a polymer composition and a method for producing the same, to a compounded product, to a cross-linked product, and to a tire.

### Background Art

Conjugated diene-based polymers produced through polymerization of a conjugated diene compound are excellent in terms of a variety of properties including heat resistance, wear resistance, mechanical strength, and moldability, and thus widely used in various industrial materials such as pneumatic tires, vibration-proof rubbers, and hoses. For example, a compounded product (i.e., a compound) used for producing treads, sidewalls, etc. of producing pneumatic tires employ a conjugated diene-based polymer. In order to enhance durability and wear resistance of such products, reinforcing agents such as carbon black and silica are known to be incorporated into the compounded product.

There have been proposed, as a conjugated diene-based polymer, various modified conjugated diene-based polymers, each of which has a functional group which interacts with silica and which has been incorporated into a terminal or a main chain of a conjugated diene-based polymer chain, in order to yield a tire having further favorable fuel efficiency. As compared with an unmodified conjugated diene-based polymer, a modified conjugated diene-based polymer has high compatibility with a reinforcing filler such as carbon black or silica. As a result, fuel efficiency can be further enhanced, while suppressing heat generation in the polymer used for tires.

Hitherto, in order to further improve properties of tires such as low fuel consumption, there has also been proposed incorporation of an additive into a solution containing a conjugated diene-based polymer formed through polymerization reaction, and subsequent removal of solvent (see Patent Documents 1 and 2). Patent Document 1 discloses that addition of a dispersant (e.g., bis(2-hydroxyethylisotridecyloxypropylamine) to a solution containing a modified conjugated diene-based polymer successfully improves rolling resistance, tensile strength, etc. Patent Document 2 discloses that addition of a non-ionic surfactant (e.g., di(polyoxyethylene)stearylamine) to a solution containing a modified or unmodified conjugated diene-based polymer in production of a rubber bale successfully improves consistency in quality of the rubber bale and dispersibility of silica in the rubber bale.

### Prior Art Documents

### Patent Documents

Patent Document 1: Japanese Translation of PCT International Application Publication No. 2017-508841
Patent Document 2: Japanese Patent Application Laid-Open (kokai) No. 2019-182996

### Summary of the Invention

### Problems to be Solved by the Invention

As disclosed in Patent Documents 1 and 2, in the case of incorporating an additive into a solution containing a conjugated diene-based polymer and subsequently removing the solvent in production of a polymer composition, performance of the polymer composition tends to vary during storage for a long period of time (i.e., poor stability over time). Thus, in relation to the polymer composition used for yielding rubber products, there is demand for a technique of yielding a cross-linked product exhibiting high tensile strength and excellent fuel efficiency, while suppressing variation in physical properties of the polymer composition during storage for a long period of time.

The present disclosure has been conceived in view of the foregoing. Thus, a main object of the disclosure is to provide a polymer composition exhibiting excellent stability over time by forming a cross-linked product which exhibits high tensile strength and suitable fuel consumption.

### Means for Solving the Problems

The present inventors have conducted extensive studies for solving the aforementioned problems, and have found that the problems can be solved by a polymer composition which contains a modified conjugated diene-based polymer having a particular structure and a particular additive. More particularly, the present disclosure provides a polymer composition and a method for producing the same, a compounded product, a cross-linked product, and a tire, as described below.
[1] A polymer composition containing a modified conjugated diene-based polymer and an acid component, and including, as an optional component, one or both of a non-ionic surfactant and an extender oil, wherein the acid component is an acid or a metal salt of an acid or both; the acid component content, with respect to 100 parts by mass of the modified conjugated diene-based polymer, is 0.1 to 20 parts by mass; the non-ionic surfactant content, with respect to 100 parts by mass of the modified conjugated diene-based polymer, is 0 to 5 parts by mass; the extender oil content, with respect to 100 parts by mass of the modified conjugated diene-based polymer, is 0 to 50 parts by mass; the total amount of the modified conjugated diene-based polymer, the acid component, the non-ionic surfactant, and the extender oil, with respect to the entire composition, is 95 mass% or more; and the modified conjugated diene-based polymer has a partial structure derived from a compound (M) having a nitrogen-containing group and two or more hydrocarbyloxysilyl groups.
[2] A compounded product containing a polymer composition as recited in [1] above and a filler.
[3] A cross-linked product formed by cross-linking a compounded product as recited in [2] above.
[4] A tire having a tread or a sidewall or both, wherein the tread or the sidewall or both are formed by use of a compounded product as recited [2] above.
[5] A method for producing a polymer composition, the method including a step of mixing a modified conjugated diene-based polymer with an acid component, at a ratio of 0.1 to 20 parts by mass of the acid component with respect to 100 parts by mass of the modified conjugated diene-based polymer, in an organic solvent, to thereby yield a mixture; and a step of removing solvent from the mixture, wherein the acid component is an acid or a metal salt of the acid or both; and the modified conjugated diene-based polymer has a partial structure derived from a compound (M) having a nitrogen-containing group and two or more hydrocarbyloxysilyl groups. Advantageous Effects of the Invention

According to the present disclosure, there can be yielded a polymer composition exhibiting excellent stability over time by forming a cross-linked product which exhibits high tensile strength and suitable fuel efficiency. In addition, by use of the polymer composition, a cross-linked product which exhibits high tensile strength and excellent fuel efficiency can be produced.

### Modes for Carrying Out the Invention

Hereinafter, the elements in relation to carrying out the present disclosure will be described in detail. Notably, the present specification is not limited to the embodiments described below, and it should be understood that various variations which are carried out without changing the gist of the present invention are encompassed in the specification.

Notably, in the present specification, a numerical range expressed with "X to Y" refers to a range defined by X as a lower limit and Y as an upper limit. The term "(meth)acryl" refers to "acryl" and "methacryl", and the term "(meth)acrylate" refers to "acrylate" and "methacrylate".

### <<Polymer composition>>

The polymer composition of the present disclosure (hereinafter may also be referred to as "the present composition") contains a modified conjugated diene-based polymer (component (A)) and an acid component (component (B)). The present composition may further contain, as an optional component or components, one or both of a non-ionic surfactant (component (C)) and an extender oil (component (D)). Hereinafter, the essential components and optional components contained in the present composition will be described.

### <Component (A): modified conjugated diene-based polymer>

The modified conjugated diene-based polymer contained in the present composition (hereinafter may also be referred to as a "modified conjugated diene-based polymer (A)") is a modified product including a monomer unit derived from a conjugated diene compound.

The modified conjugated diene-based polymer (A) has a partial structure derived from a compound having a nitrogen-containing group and two or more hydrocarbyloxysilyl groups (hereinafter may also be referred to as a "compound (M)"). By incorporating such a modified conjugated diene-based polymer into the present composition, when a compounded product is yielded from the present composition and a filler, dispersibility of the filler (particularly, silica) can be enhanced. From the viewpoint of achieving a high effect of improving dispersibility of a filler, the modified conjugated diene-based polymer (A) preferably has a partial structure derived from a compound (M), and a plurality of conjugated diene-based polymer chains bound to the partial structure derived from a compound (M). The compound (M) will be described in detail in the below-mentioned paragraph

### <Modification step>.

As used herein, the term "hydrocarbyloxysilyl group" refers to a monovalent or divalent group in which 1 to 3 hydrocarbyloxy groups are bound to a silicon atom. That is, the hydrocarbyloxysilyl group may be represented by "-Si(OR¹)_{3-w}(R²)_{w}" or ">Si(OR¹)_{2-y}(R²)_{y}" (wherein each of R¹ and R² independently represents a hydrocarbyl group; w is an integer of 0 to 2; and y is 0 or 1). One exemplary compound having two monovalent groups represented by "-Si(OR¹)₃" in one molecule and a nitrogen-containing group corresponds to a "compound having a nitrogen-containing group and two hydrocarbyloxysilyl group". Notably, the expression "having two or more hydrocarbyloxysilyl groups" does not mean the number of hydrocarbyloxy groups bound to a silicon atom.

The modified conjugated diene-based polymer (A) may be produced through a method including the following polymerization step and modification step:
Polymerization step: a step of polymerizing a monomer including a conjugated diene compound in the presence of a polymerization initiator, to thereby form a conjugated diene-based polymer having an active end, and
Modification step: a step of reacting the conjugated diene-based polymer having an active end with a compound (M), to thereby yield a modified conjugated diene-based polymer (A).

Hereinafter, a method of producing the modified conjugated diene-based polymer (A), and also the molecular structure and the like of the modified conjugated diene-based polymer (A) will be described.

### <Polymerization step>

### (Conjugated diene compound)

Examples of the conjugated diene compound include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. The conjugated diene compound is preferably one or more members of 1,3-butadiene, isoprene, and 2,3-dimethyl-1,3-butadiene. From the viewpoint of a high effect of improving processability and reduction of hysteresis loss in a well-balanced manner, the conjugated diene compound is particularly preferably 1,3-butadiene. Notably, the conjugated diene compound may be used singly or in combination of two or more species.

The conjugated diene-based polymer may be a homopolymer formed by use of the conjugated diene compound. However, from the viewpoint of achieving enhanced rubber strength, the conjugated diene-based polymer is preferably a copolymer including a structural unit derived from a conjugated diene compound and a structural unit derived from an aromatic vinyl compound. Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, vinylxylene, vinylnaphthalene, vinylpyridine, diphenylethylene, and tertiary amino group-containing diphenylethylene (e.g., 1-(4-N,N-dimethylaminophenyl)-1-phenylethylene). Among them, the aromatic vinyl compound is preferably styrene or α-methylstyrene.

In the case where the conjugated diene-based polymer produced in the polymerization step is a copolymer of a conjugated diene compound and an aromatic vinyl compound, the conjugated diene-based polymer is preferably a copolymer including a structural unit derived from 1,3-butadiene and a structural unit derived from styrene, from the viewpoint of achieving high living performance in anionic polymerization. When the conjugated diene-based polymer is a copolymer, the copolymer is preferably a random copolymer of a conjugated diene compound and an aromatic vinyl compound. Notably, the random copolymer may further include a block formed of a conjugated diene compound or another aromatic vinyl compound.

From the viewpoint of achieving a suitable balance between low hysteresis loss characteristic (low fuel consumption) and wet skid resistance, and wearing resistance of a cross-linked product obtained from the present composition, the relative amount of the aromatic vinyl compound used, with respect to the total amount of the monomers involved in polymerization, is preferably 3 to 55 mass%, more preferably 5 to 50 mass%. Notably, the relative amount of the structural unit derived from the aromatic vinyl compound in the polymer is a value determined through ¹H-NMR.

In the polymerization, a compound other than the conjugated diene compound and the aromatic vinyl compound (hereinafter may also be referred to as an "additional monomer") may be used as a monomer. Examples of the additional monomer include acrylonitrile, methyl (meth)acrylate, and ethyl (meth)acrylate. When the additional monomer is used, the additional monomer content, with respect to the total amount of the monomers involved in polymerization, is preferably 5 mass% or lower, more preferably 3 mass% or lower.

The polymerization method is particularly preferably solution polymerization. The format of polymerization may be a batch manner or a continuous manner. From the viewpoint of productivity of a polymer, a continuous format is preferred. When solution polymerization is employed, one specific example of the polymerization method is polymerizing a monomer or monomers in an organic solvent in the presence of a polymerization initiator and an optionally used vinyl group content-adjusting agent (i.e., a randomizer).

Specific examples of the polymerization method further include a method in which an organic solvent, a polymerization initiator, and a monomer are simultaneously added to a reactor, and a method in which an organic solvent, a polymerization initiator, and a monomer are continuously or intermittently added to a reactor in a divided manner. From the viewpoints of achieving suitable processability of the polymer composition, enhancing the dispersibility of a filler (particularly, silica), and yielding a cross-linked product having excellent tensile characteristics, a method in which an organic solvent, a polymerization initiator, and a monomer are continuously or intermittently added to a reactor in a divided manner is preferably employed, to thereby produce the modified conjugated diene-based polymer (A).

As the polymerization initiator, at least one species selected from the group consisting of an alkali metal compound and an alkaline earth metal compound is preferably used. Specific examples thereof include alkyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, di-n-butylmagnesium, di-n-hexylmagnesium, ethoxypotassium, and calcium stearate. Specific examples of the alkyllithium include methyllithium, ethyllithium, n-propyllithium, n-butyllithium, sec-butyllithium, and t-butyllithium. The polymerization initiator is preferably a lithium compound. In the polymerization, the relative amount of the polymerization initiator used (the total amount in the case of using 2 or more monomers), with respect to 100 g of the monomer(s) employed in polymerization, is preferably 0.2 to 20 mmol.

Alternatively, the polymerization reaction may be performed in the presence of a compound obtained by mixing at least one species selected from the group consisting of an alkali metal compound and an alkaline earth metal compound and an initiation terminal modifier (hereinafter may also be referred to as a "metal amide compound"). By conducting polymerization of a monomer or monomers in the presence of a metal amide compound, a functional group derived from the initiation terminal modifier can be incorporated into a polymerization initiation end of the conjugated diene-based polymer.

As the initiation terminal modifier, a nitrogen-containing compound such as a secondary amine compound is preferably used. Specific examples of the initiation terminal modifier include dimethylamine, diethylamine, dipropylamine, dibutylamine, chain amines such as dodecamethylenimine, N,N'-dimethyl-N'-trimethylsilyl-1,6-diaminohexane, di(2-ethylhexyl)amine, and diallylamine; and cyclic amines such as piperidine, pyrrolidine, hexamethylenimine, heptamethylenimine, dicyclohexylamine, N-methylbenzylamine, morpholine, N-(trimethylsilyl)piperazine, N-(tert-butyldimethylsilyl)piperazine, and 1,3-ditrimethylsilyl-1,3,5-triazinane.

Notably, in the case where a monomer or monomers are polymerized in the presence of a compound prepared by mixing an alkali metal compound or an alkaline earth metal compound with an initiation terminal modifier, in one possible procedure, at least one of the alkali metal compound and the alkaline earth metal compound is mixed with the initiation terminal modifier in advance, and the resultant mixture is added to the polymerization system for polymerization. In an alternative manner, at least one of the alkali metal compound and the alkaline earth metal compound and the initiation terminal modifier is separately or simultaneously added to the polymerization system, and the two components are mixed in the polymerization system for polymerization. Each of the above polymerization procedure is encompassed in an embodiment "polymerization of a monomer or monomers in the presence of a compound obtained by mixing at least one species selected from the group consisting of an alkali metal compound and an alkaline earth metal compound and an initiation terminal modifier".

The amount of the initiation terminal modifier used is appropriately set in accordance with the type of the alkali metal compound or the alkaline earth metal compound. For example, when metallic lithium is used, the relative amount of the initiation terminal modifier used, with respect to 1 mol of the entire metallic lithium employed in the polymerization, is preferably 0.1 to 1.8 mol, more preferably 0.2 to 1.0 mol, from the viewpoint of yielding a modified conjugated diene-based polymer having processability and low fuel consumption which are improved in a well-balanced manner. The initiation terminal modifier may be used singly or in combination of two or more species.

Also, a nitrogen-containing alkali metal compound may also be used as a polymerization initiator in the polymerization reaction. Examples of the nitrogen-containing alkali metal compound include compounds represented by the following formula (1): 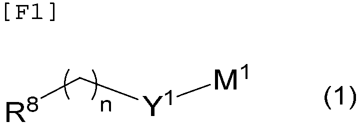 (wherein R⁸ represents a nitrogen-containing group; Y¹ represents a hydrocarbylene group obtained through polymerization of a conjugated diene compound or an aromatic vinyl compound; M¹ represents an alkali metal; and n is an integer of 1 to 10).

In the above formula (1), R⁸ is preferably a monovalent nitrogen-containing group which is bound to a group "-(CH₂)ₙ-" at the nitrogen atom and which has no active hydrogen, more preferably a tertiary amino group.

Regarding Y¹, a compound exemplified as a monomer as that employed in polymerization may be used as the conjugated diene compound and the aromatic vinyl compound. Among them, Y¹ is preferably a hydrocarbylene group which is formed through polymerization of 1,3-butadiene, isoprene, 2,3-dimethyl-1,3-butadiene, or styrene, more preferably a hydrocarbylene group formed though polymerization of isoprene. The degree of polymerization of Y¹ is preferably 2 to 10, more preferably 2 to 4. Examples of M¹ include lithium, sodium, and potassium. Of these, lithium is preferred.

Examples of the compound represented by the above formula (1) include ((2E,6E)-11-(dimethylamino)-3,7-dimethylundeca-2,6-dien-1-yl)lithium.

Notably, through any of polymerization of a monomer or monomers in the presence of a compound prepared by mixing an alkali metal compound or an alkaline earth metal compound with an initiation terminal modifier, or polymerization of a monomer or monomers in the presence of the nitrogen-containing alkali metal compound, a partial structure derived from a nitrogen-containing compound can be incorporated into a polymerization initiation end.

The vinyl group content-adjusting agent (i.e., a randomizer) is used for the purpose of adjusting the vinyl group content of the polymer (i.e., a vinyl bond content) and for other reasons. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used singly or in combination of two or more species.

The organic solvent employed in polymerization is essentially an organic solvent inert to the relevant reaction. Examples of the organic solvent include chain or cyclic aliphatic hydrocarbons, and aromatic hydrocarbons. The organic solvent employed in polymerization is preferably a C3 to C8 hydrocarbon. Specific examples thereof include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. The above organic solvents may be used singly or in combination of two or more species.

When solution polymerization is employed, from the viewpoint of maintaining balance between productivity and ease of controlling polymerization, the monomer concentration of reaction solvent is preferably 5 to 50 mass%, more preferably 10 to 30 mass%. The polymerization reaction temperature is preferably -20°C to 150°C, more preferably 0 to 120°C. Also, the polymerization reaction is preferably performed at a pressure enough to maintain the monomer(s) to substantially a liquid phase. Through the aforementioned polymerization reaction, a conjugated diene-based polymer having an active end (more specifically, an alkali metal active end or an alkaline earth metal active end) can be yielded. As used herein, the term "active end" refers to as a portion other than a structure which is derived from a monomer having a carbon-carbon double bond and which is present at an end of the molecular chain (more specifically, a metallic end).

The 1,2-vinyl group content of the conjugated diene-based polymer having an active end (hereinafter may also be referred to as a "vinyl group content) is preferably 15 mass% or higher, more preferably 20 mass% or higher. When the vinyl group content is 15 mass% or higher, suitable wet grip characteristic is generally secured. Also, the vinyl group content is preferably 70 mass% or lower. When the vinyl group content is 70 mass% or lower, suitable fuel efficiency can be generally secured. From such a viewpoint, the vinyl group content is preferably 60 mass% or lower, more preferably 50 mass% or lower. As used herein, the term "vinyl group content" refers to a relative amount of a structural unit having a 1,2-bond, with respect to all the structural units in butadiene forming the conjugated diene-based polymer. The value is determined through ¹H-NMR.

### <Modification step>

The modified conjugated diene-based polymer (A) is preferably a polymer which is obtained by reacting an active end possessed by the conjugated diene-based polymer obtained through the above polymerization step, with the compound (M) serving as the terminal modifier. When the conjugated diene-based polymer having an active end is caused to react with the compound (M), a polymer chain including a monomer unit derived from a conjugated diene compound reacts with the compound (M) at a reaction site of the compound (M), to thereby yield a modified conjugated diene-based polymer (A) having a plurality of polymer chains in a molecule. As a result, the low heat generation property of the cross-linked product produced from the present composition can be enhanced to an excellent level.

In the conjugated diene-based polymer having an active end which polymer is to be reacted with the compound (M), the polymerization initiation end may be modified or unmodified. By reacting a conjugated diene-based polymer having a polymerization initiation end which has been modified with a nitrogen-containing compound (i.e., a conjugated diene-based polymer having an active end) with the compound (M), there can be produced a modified conjugated diene-based polymer having a partial structure derived from a nitrogen-containing compound at an end of at least a part of a plurality of conjugated diene-based polymer chains.

The compound (M) essentially has one or more nitrogen-containing groups in one molecule and two or more hydrocarbyloxysilyl groups in one molecule. The nitrogen-containing group is preferably one or more groups selected from the group consisting of a protected primary amino group, a protected secondary amino group, a tertiary amino group, an imino group, and an imidazolyl group. By virtue of the presence of such groups, a functional group which is actively involved in enhancement dispersibility of a filler (particularly, silica) can be incorporated into the polymer in a relatively easy manner.

Examples of the protected primary amino group include such a group in which two hydrogen atoms bound to a nitrogen atom of the primary amino group are substituted by a monovalent protecting group. Examples of the protected secondary amino group include such a group in which one hydrogen atom bound to a nitrogen atom is substituted by a monovalent protecting group and an amino group present in an azasilolidyl group. Notably, the hydrocarbyloxysilyl group (-Si(R^{a})(R^{b})-) in the azasilolidyl group represented by the following formula (2): [F2] (wherein R^{a} represents a hydrocarbyloxy group; R^{b} represents a hydrocarbyl group or a hydrocarbyloxy group; and "*" represents a chemical bond) is a group which reacts with an active end of the conjugated diene-based polymer and serves as a protecting group which protects a secondary amino group. The partial structure represented by the above formula (2) has one hydrocarbyloxy group and one nitrogen-containing group (i.e., a protected secondary amino group). As used herein, the term "protecting group" refers to a group that can transform a nitrogen-containing group to a functional group which is inert to a polymerization active end. Examples of the monovalent protecting group include a trihydroalkylsilyl group.

Specific examples of preferred members of the compound (M) include at least one species selected from the group consisting of the compounds represented by the following formula (3), the compounds represented by the following formula (4), and the compounds represented by the following formula (5). 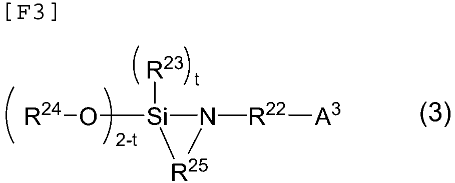
(In formula (3), A³ represents a monovalent functional group which has a hydrocarbyloxysilyl group, an optional nitrogen atom, and no active hydrogen, and is bound to R²² via nitrogen or silicon; R²² represents a single bond or a hydrocarbylene group; each of R²³ and R²⁴ independently represents a hydrocarbyl group; R²⁵ represents a hydrocarbylene group; t is 0 or 1; and, when t is 0, a plurality of R²⁴s in the formula are identical to or different from one another.) 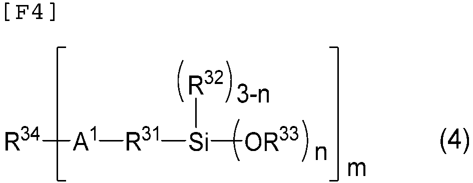
(In formula (4), R³¹ represents a C1 to C20 alkanediyl group; each of R³² and R³³ independently represents a C1 to C20 hydrocarbyl group; A¹ represents a group "*-C(R³⁵)=N-" or a group "*-N=C(R³⁵)-" (wherein R³⁵ represents a hydrogen atom or a hydrocarbyl group; and "*" represents a chemical bond to R³⁴); R³⁴ represents a C1 to C20 m-valent hydrocarbon group, or a C1 to C20 m-valent group which has at least one atom selected from the group consisting of nitrogen, oxygen, and sulfur, and no active hydrogen; n is an integer of 1 to 3; m is an integer of 2 to 10; when each of R³¹ to R³³ and A¹ consists of a plurality of members in the formula, the groups represented by each symbol are identical to or different from one another; and a plurality of "n"s in the formula are identical to or different from one another.) 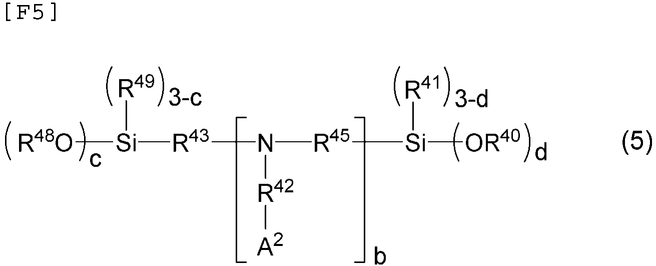
(In formula (5), each of R⁴², R⁴³, and R⁴⁵ independently represents a C1 to C12 alkanediyl group; each of R⁴⁰, R⁴¹, R⁴⁸, and R⁴⁹ independently represents a C1 to C20 hydrocarbyl group; A² represents a nitrogen-containing heterocyclic group or a group represented by the following formula (a-2): 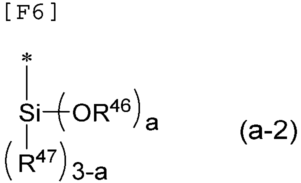
(wherein each of R⁴⁶ and R⁴⁷ independently represents a C1 to C20 hydrocarbyl group; a is an integer of 1 to 3; when a plurality of groups represented by a specific symbol are present in the formula, the groups represented by the specific symbol are identical to or different from one another; and "*" represents a chemical bond);
each of c and d is an integer of 1 to 3; b is an integer of 1 to 10; and, when a plurality of groups represented by a specific symbol are present in the formula, the groups represented by the specific symbol are identical to or different from one another.)

In the above formula (3), each of the hydrocarbyl group represented by R²³ and R²⁴ is preferably a C1 to C20 linear-chain or branched alkyl group, a C3 to C20 cycloalkyl group, or a C6 to C20 aryl group. R2² is preferably a C1 to C20 linear-chain or branched alkanediyl group, a C3 to C20 cycloalkylene group, or a C6 to C20 arylene group. R2⁵ is preferably a C1 to C20 linear-chain or branched alkanediyl group. R2⁵ is preferably a C2 to C4 hydrocarbylene group, more preferably a C2 to C4 linear-chain hydrocarbylene group, still more preferably a 1,3-propanediyl group.

Specific examples of A³ include the groups represented by the following formula (a3-1) or (a3-2): 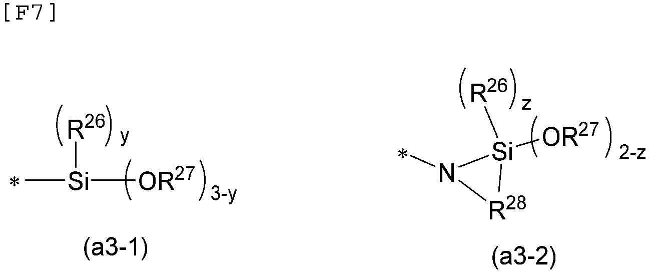 (wherein each of R²⁶ and R²⁷ independently represents a hydrocarbyl group; y is an integer of 0 to 2; z is 0 or 1; when y is 2, a plurality of R²⁶s in the formulas are identical to or different from one another; when y is 0 or 1, a plurality of R²⁷s in the formulas are identical to or different from one another; when z is 0, a plurality of R²⁷s in the relevant formula are identical to or different from one another; R²⁸ represents a hydrocarbylene group; and "*" represents a chemical bond to R²²).

In the above formula (a3-1) or (a3-2), examples of the preferred hydrocarbyl group represented by R²⁶ or R²⁷ include the same groups exemplified as R²³ and R²⁴. Examples of the preferred hydrocarbylene group represented by R²⁸ include the same groups exemplified as R²⁵.

In the above formula (4), examples of the hydrocarbylene group represented by R³¹ include a C1 to C12 alkanediyl group, a C3 to C12 cycloalkylene group, and a C6 to C12 arylene group. Examples of the hydrocarbyl group represented by R³² or R³³ include a C1 to C20 alkyl group, an allyl group, a C3 to C20 cycloalkyl group, and a C6 to C20 aryl group.

The m-valent hydrocarbon group represented by R³⁴ is a group formed by removing m hydrogen atoms from the corresponding hydrocarbon. Among such groups, the m-valent hydrocarbon group represented by R³⁴ is preferably a group formed by removing m hydrogen atoms from a ring moiety of an aromatic hydrocarbon (i.e., an m-valent aromatic ring group). Specific examples of the aromatic hydrocarbon include a monocycle and a condensed ring such as a benzene ring, a naphthalene ring, and an anthracene ring; and a structure formed by combining two or more of the above-mentioned rings via a single bond.

In the case where R³⁴ is a C1 to C20 m-valent group which has at least one atom selected from the group consisting of nitrogen, oxygen, and sulfur, and no active hydrogen, specific examples thereof include an m-valent heterocyclic group and an m-valent group having a tertiary amine structure. The heterocyclic group preferably has a conjugated system, and examples thereof include a monocycle and a condensed ring such as pyridine, pyrimidine, pyrazine, quinoline, naphtharidine, furan, and thiophene; and a group formed by removing m hydrogen atoms from a ring moiety of a structure which has been formed by linking a plurality of the above-mentioned rings.

From the viewpoint of achieving more enhanced processability of the polymer composition, m is preferably 2 to 6. From the viewpoint of achieving a more enhanced effect of improving dispersibility of silica, n is preferably 2 or 3, more preferably 3.

In the above formulas (5) and (a-2), the alkanediyl group of R⁴⁵, R⁴², or R⁴³ is preferably a linear-chain group. Examples of the hydrocarbyl group of any of R⁴⁰, R⁴¹, and R⁴⁶ to R⁴⁹ include a C1 to C20 alkyl group, allyl group, a C3 to C20 cycloalkyl group, and a C6 to C20 aryl group. The nitrogen-containing heterocyclic group represented by A² is preferably a group derived from a conjugated heterocycle, and examples thereof include a group formed by removing one hydrogen atom from a nitrogen-containing heterocycle such as pyrrole, imidazole, pyridine, pyrimidine, pyrazine, quinoline, naphtharidine, or benzimidazole.

From the viewpoint of achieving a more enhanced effect of improving dispersibility of silica, each of a, c, and d is preferably 2 or 3, more preferably 3. The "b" is preferably 1 to 5, more preferably 1 to 3.

Specific examples of the terminal modifier, as the compound represented by the above formula (3), include 2,2-dimethoxy1-(3-trimethoxysilylpropyl)-1,2-azasilolidine, 1,3-bis(2,2-dimethoxy-1,2-azasilolidin-1-yl)propane, and such a compound in which the alkyl group or the alkanediyl group has been substituted by a C1 to C6 alkyl group or a C1 to C6 alkanediyl group. Notably, 2,2-dimethoxy-1-(3-trimethoxysilylpropyl)-1,2-azasilolidine is a compound having one nitrogen-containing group and two hydroxycarbyloxysilyl groups.

Examples of the compound represented by the above formula (4) include the compounds represented by the following formulas (m-1-1) to (m-1-8): 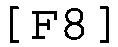 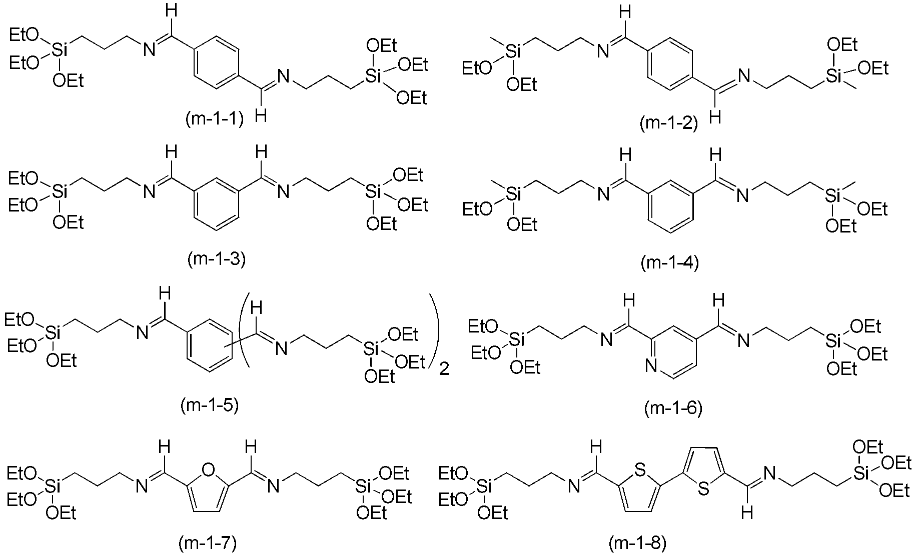 and such a compound in which the alkyl group or the alkanediyl group has been substituted by a C1 to C6 alkyl group or a C1 to C6 alkanediyl group.

Examples of the compound represented by the above formula (5) include tris(2-triethoxysilylethyl)amine, tris(3-triethoxysilylpropyl)amine, tris(5-triethoxysilylpentyl)amine, N,N,N',N'-tetra(2-triethoxysilylethyl)-1,2-diaminoethane, N,N,N',N'-tetra(3-triethoxysilylpropyl)-1,3-diaminopropane, N-(3-(1H-imidazol-1-yl)propyl)-N,N-bis(3-(trimethoxysilyl))propyl)propanamine, and such a compound in which the alkyl group or the alkanediyl group has been substituted by a C1 to C6 alkyl group or a C1 to C6 alkanediyl group. The terminal modifier may be used singly or in combination of two or more species among the above examples.

Reaction between the polymerization active end and the terminal modifier is preferably conducted as solution reaction. The solution reaction may be conducted by use of a solution containing unreacted monomers after termination of polymerization reaction, or may be conducted after isolating a conjugated diene-based polymer having a polymerization active end contained in the solution and dissolved in an appropriate solvent such as cyclohexane. Also, the reaction may be conducted in a batch manner or a continuous manner. No particular limitation is imposed on the method of adding the terminal modifier, and examples of the format of the addition include a one-batch manner, a divided manner, and a continuous manner.

In the above reaction, the amount of the terminal modifier used may be appropriately set in accordance with the type of the compound employed in the reaction. The amount of terminal modifier used, with respect to the metal atoms possessed by the polymerization initiator and involved in polymerization reaction, is preferably 0.1 mol equivalents or more, more preferably 0.3 mol equivalents or more. By adjusting the amount of the terminal modifier employed in the above reaction to 0.1 mol equivalents or more, modification reaction can satisfactorily proceed, whereby dispersibility of a filler can be suitably improved. Also, the amount of terminal modifier used, with respect to the metal atoms possessed by the polymerization initiator and involved in polymerization reaction, is preferably 1.5 mol equivalents or less, more preferably 1.2 mol equivalents or less.

The temperature at which the above reaction is conducted is generally equivalent to that of the polymerization reaction, and is preferably adjusted to -20°C to 150°C, more preferably 0 to 120°C. When the reaction temperature is excessively low, the viscosity of the conjugated diene-based polymer after modification generally rises. In contrast, when the reaction temperature is excessively high, the polymerization active end is readily deactivated. The reaction time is preferably 1 minute to 5 hours, more preferably 2 minutes to 1 hour.

In production of the modified conjugated diene-based polymer (A), for the purpose of enhancing Mooney viscosity and cold flow characteristics of the produced polymer and other reasons, a treatment of reacting the polymerization active end with a coupling agent may be conducted. The reaction employing the coupling agent may be conducted before or after the reaction between the polymerization active end and the terminal modifier, or simultaneously with the reaction between the polymerization active end and the terminal modifier. Specific examples of the coupling agent include 2,4-tolylene diisocyanate, diphenylmethane diisocyanate, N,N,N',N'-tetramethylphthalamide, tetrachlorosilicon, N,N,N',N'-tetramethyl-4,4'-diaminobenzophenone, and tetrachlorotin. In an alternative way, before performing the reaction between the polymerization active end and the terminal modifier, an aromatic vinyl compound in which a hydrocarbyloxysilyl group is bound to an aromatic ring (hereinafter may also be referred to as a "particular branching agent") reacted, then further polymerization reaction is caused to proceed by adding one or both of the conjugated diene compound and the aromatic vinyl compound (excepting the particular branching agent), and then, the terminal modifier is added.

When a compound having a protecting group (e.g., trimethylsilyl group) is used as a terminal modifier, there may be used a modified conjugated diene-based polymer formed by partially or totally substituting the protecting groups of a modified conjugated diene-based polymer having protecting groups derived from the terminal modifier with hydrogen, in the following step. In addition, when the compound having a protecting group is used as a terminal modifier, the modified conjugated diene-based polymer which has been modified with the terminal modifier may be further reacted with an onium salt-forming agent. In this case, a polymer having an onium salt structure at a polymer end can be yielded as the modified conjugated diene-based polymer. The presence of an onium salt structure in the modified conjugated diene-based polymer is preferred, since the shape stability of the cross-linked product formed from the polymer composition can be improved.

The weight average molecular weight (Mw) (as reduced to polystyrene) of the modified conjugated diene-based polymer (A) as determined through gel permeation chromatograph (GPC) is preferably 1.0×10⁵ or higher. When the Mw is 1.0×10⁵ or higher, generally, shape stability, tensile strength, and wear resistance of a cross-linked product can be satisfactorily enhanced. The Mw of the modified conjugated diene-based polymer (A) is more preferably 1.2×10⁵ or higher, still more preferably 1.5×10⁵ or higher. Also, the Mw of the modified conjugated diene-based polymer (A) is preferably 3.0×10⁶ or lower. When the Mw is 3.0×10⁶ or higher, processability of the polymer composition tends to easily decrease. The Mw of the modified conjugated diene-based polymer (A) is more preferably 2.5×10⁶ or lower, still more preferably 2.0×10⁶ or lower. In the specification, the weight average molecular weight (Mw) of the modified conjugated diene-based polymer (A) refers to a value determined from all the peaks included in the GPC curve obtained through GPC (i.e., total weight average molecular weight).

The molecular weight distribution (Mw/Mn) of the modified conjugated diene-based polymer (A), which is represented by a ratio of weight average molecular weight (Mw) to number average molecular weight (Mn) (the molecular weight being determined through GPC and reduced to polystyrene), is preferably 1.05 to 4.00. When the Mw/Mn is 1.05 or greater, processability in production of a cross-linked product can be suitably maintained, and dispersibility of a filler, rolling resistance (low fuel consumption), and tensile characteristics can be generally enhanced. The Mw/Mn of the modified conjugated diene-based polymer (A) is more preferably 1.10 or greater, still more preferably 1.20 or greater. When the Mw/Mn of the modified conjugated diene-based polymer (A) is 4.00 or lower, low fuel consumption exerted by a cross-linked product, and dispersibility of a reinforcing filler can be generally maintained at a suitable state. The Mw/Mn of the modified conjugated diene-based polymer (A) is more preferably 3.50 or lower, still more preferably 3.00 or lower.

### <Component (B): acid component>

The acid component contained in the present composition (hereinafter may also be referred to as an "acid component (B)") is an acid or a metal salt of the acid. The present composition may contain, as the acid component (B), only an acid, only a metal salt of the acid, or both the acid and the metal salt of the acid.

In the acid component (B), the acid may be an inorganic acid (e.g., boric acid, hydrochloric acid, nitric acid, or phosphoric acid) or an organic acid. In addition, no particular limitation is imposed on the metal element of the metal salt of the acid. Examples of the metal element forming the metal salt of the acid include an alkali metal element, an alkaline earth metal element, a group 4 element, a group 13 element, a group 14 element, and a group 15 element. The metal element including the metal salt of the acid is preferably one or more species from among sodium, calcium, titanium, tin, zirconium, bismuth, and aluminum, more preferably sodium or tin, still more preferably tin.

From the viewpoint of retention of the acid component (B) in the modified conjugated diene-based polymer (A), to thereby provide a polymer composition in which a drop in performance over time is satisfactorily suppressed, the acid including the acid component (B) is preferably an organic acid. Also, the acid component (B) preferably includes at least one species selected from the group consisting of an organic acid and an organic acid salt.

Specific examples of the organic acid include carboxylic acid, carboxylic anhydride, organic phosphorous or phosphoric acid, organic sulfonic acid, organic sulfinic acid, and thioacid. Further specific examples of the carboxylic acid include formic acid, acetic acid, maleic acid, propionic acid, isobutyric acid, 2-methylbutyric acid, octylic acid, 2-methylpentanoic acid, 2-ethylhexanoic acid, cyclohexanecarboxylic acid, oleic acid, lauric acid, palmitic acid, stearic acid, isostearic acid, methoxyacetic acid, 2-chloropropionic acid, 3-chloropropionic acid, α-bromopropionic acid, acrylic acid, methacrylic acid, vinylacetic acid, crotonic acid, sorbic acid, glyoxylic acid, pyruvic acid, levilinic acid, phenylacetic acid, benzoic acid, thioglycolic acid, β-mercaptopropionic acid, nitrobenzoic acid, salicylic acid, lactic acid, dimethylolpropionic acid, dimethylolbutanoic acid, gluconic acid, isoleucine, alanine, glycine, β-alanine, threonine, serine, isoserine, tyrosine, aminobenzoic acid, tryptophane, oxalic acid, malonic acid, succinic acid, glutaric acid, adipic acid, methylsuccinic acid, sebacic acid, dodecanedioic acid, fumaric acid, itaconic acid, citraconic acid, isophthalic acid, terephthalic acid, 1,4-naphthalenedicarboxylic acid, trimellitic acid, pyromellitic acid, tartaric acid, citric acid, malic acid, glutamic acid, aspartic acid, and cystine.

Example of the carboxylic anhydride include isobutyric anhydride, itaconic anhydride, succinic anhydride, acetic anhydride, citraconic anhydride, propionic anhydride, maleic anhydride, butyric anhydride, and phthalic anhydride.

Examples of the organic phosphorous or phosphoric acid include methyl dimethyl phosphinate, ethyl diphenyl phosphinate, dimethyl methyl phosphonate, diphenyl phenyl phosphonate, trimethyl phosphate, triphenyl phosphate, methyl diphenyl phosphate, and ethyl methyl phenyl phosphate.

Examples of the organic sulfonic acid include methanesulfonic acid, ethanesulfonic acid, benzenesulfonic acid, trifluoromethanesulfonic acid, and p-toluenesulfonic acid.

Examples of the organic sulfinic acid include methanesulfinic acid, ethanesulfinic acid, p-toluenesulfinic acid, and trifluoromethanesulfinic acid.

Examples of the thioacid include dithioacetic acid.

Examples of the organic acid salt include a sodium compound, a calcium compound, a titanium compound, a tin compound, a zirconium compound, a bismuth compound, and an aluminum compound of the above-exemplified organic acids. Specific examples include sodium 2-ethylhexanoate, calcium bis(2-ethylhexanoate), titanium bis(oleate)bis(2-ethylhexanoate), titanium tetrakis(2-ethylhexanoate), titanium tetrakis(laurate), titanium tetrakis(stearate), tin bis(2-ethylhexanoate), oxyzirconium bis(2-ethylhexanoate), bismuth tris(2-ethylhexanoate), aluminum tris(2-ethylhexanoate), and aluminum tris(stearate).

No particular limitation is imposed on the acidity of the acid forming the acid component (B), which is specifically the pH of the acid forming the acid component (B) at 20°C, is for example, 1 to 6. From the viewpoint of achieving a high effect of enhancing the over-time stability of the modified conjugated diene-based polymer (A), the pH of the acid forming the acid component (B) at 20°C is preferably 2 to 5, more preferably 2 to 4.5. Notably, in the present specification, the pH of the acid component (B), when it is an organic acid, corresponds to a value measured by use of a liquid mixture of acid (1.0 g) and water (1.0 L). When the acid component (B) is an inorganic acid, the pH corresponds to a value measured by use of a 1 mol/L aqueous solution. In the case of a metal salt of the acid, the pH corresponds to the pH of the acid forming the metal salt thereof.

The acid component (B) preferably has high solubility in a good solvent for the modified conjugated diene-based polymer (A). Specifically, an acid or a metal salt thereof having a solubility in cyclohexane at 25°C of 1.0 g/L or higher is preferably used as the acid component (B). By use of such an acid or a metal salt thereof as the acid component (B), dispersibility of the acid component (B) in the modified conjugated diene-based polymer (A) can be enhanced, whereby the over-time stability of the modified conjugated diene-based polymer (A) can be further enhanced by the effect of the acid component (B). Notably, the solubility of the acid or a metal salt thereof in cyclohexane may be evaluated by preparing a liquid mixture of the acid component and cyclohexane so as to attain an acid (or a metal salt thereof) concentration of interest, and observing the phase separation state and a dissolution reside of the acid or the metal salt thereof in the liquid mixture.

The acid component (B) content, with respect to 100 parts by mass of the modified conjugated diene-based polymer (A), is 0.1 to 20 parts by mass. When the acid component (B) content is lower than 0.1 parts by mass, the over-time stability of the polymer composition is insufficient, thereby failing to yield a cross-linked product exhibiting suitable performance. Also, when the acid component (B) content exceeds 20 parts by mass, a drop in performance of the modified conjugated diene-based polymer (A) is evoked by the acid component (B). From such viewpoints, the acid component (B) content, with respect to 100 parts by mass of the modified conjugated diene-based polymer (A), is preferably 0.15 parts by mass or higher, more preferably 0.2 parts by mass or higher. Also, the acid component (B), with respect to 100 parts by mass of the modified conjugated diene-based polymer (A), is preferably 15 parts by mass or lower, more preferably 10 parts by mass or lower, still more preferably 5 parts by mass. The acid component (B) may be used singly or in combination of two or more species.

### <Component (C): non-ionic surfactant>

The present composition may further contain a non-ionic surfactant. By further incorporating a non-ionic surfactant into the present composition, the mechanical strength of and low fuel consumption exerted by the cross-linked product produced from the present composition can be further enhanced, while over-time stability of the polymer composition is enhanced.

No particular limitation is imposed on the non-ionic surfactant incorporated into the present composition. Examples of the non-ionic surfactant include the compounds represented by the following formula (6), the compounds represented by the following formula (7), and the compounds represented by the following formula (8). 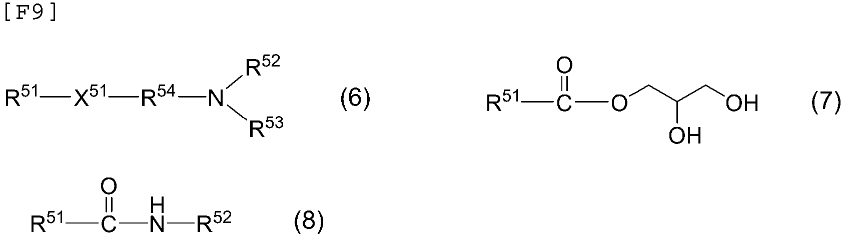 (In the formulas (6) to (8), R⁵¹ represents a C10 to C18 hydrocarbyl group; each of R⁵² and R⁵³ independently represents a hydrocarbyl group or -(R⁵⁶O)ᵣ-H; R⁵⁶ represents an ethylene group or a propylene group; r is an integer of 1 or greater; when r is 2 or greater, a plurality of R⁵⁶s are identical to or different from one another; X⁵¹ represents a single bond, an oxygen atom, or -NR⁵⁵-; when X⁵¹ is a single bond, R⁵⁴ represents a single bond; when X⁵¹ is an oxygen atom or -NR⁵⁵-, R⁵⁴ represents a hydrocarbylene group; and R⁵⁵ represents a hydrogen atom, a hydrocarbyl group, or -(R⁵⁶O)ᵣ-H.)

In the above formulas (6) to (8), R⁵¹ is preferably a saturated or unsaturated linear-chain hydrocarbyl group, more preferably a linear-chain alkyl group or alkenyl group. When R⁵⁴ is a hydrocarbylene group, R⁵⁴ is preferably a saturated or unsaturated linear-chain hydrocarbylene group, more preferably a linear-chain alkanediyl group or alkenediyl group.

Specific examples of the compound represented by the above formula (6) include polyoxyethylene alkylamine, polyoxypropylene polyoxyethylene alkylamine, polyoxypropylene alkylamine, polyoxyethylene-alkylpropylene-diamine, polyoxypropylene-alkylpropylene-diamine, 1,1'-(dodecylimino)bis(2-propanol), 2,2'-(dodecylimino)bisethanol, and 2,2'-(hexadecylimino)bisethanol.

Specific examples of the compound represented by the above formula (7) include glycerin monostearate and glycerin monooleate.

Specific examples of the compound represented by the above formula (8) include polyoxyethylene laurate monoethanolamide, polyoxypropylene cocoate monoethanolamide, polyoxypropylene myristate monoethanolamide, and polyoxypropylene cocoate monoisopropanolamide.

Other examples of the non-ionic surfactant include polyoxyethylene alkyl ether, polyoxyethylene alkyl phenyl ether, polyoxyethylene distyrenized phenyl ether, polyoxyethylene polyoxypropylene glycol or its fatty acid ester, pentaerythritol fatty acid ester, polyoxyethylene sorbitan fatty acid ester, glycerin ester polyoxyethylene ether, polyethylene glycol fatty acid ester, sorbitan ester, and glycosides.

As the non-ionic surfactant, a compound having a propylene glycol chain -(R⁵⁰-O)ⱼ- (wherein R⁵⁰ represents a propylene group, and j is an integer of 1 or greater) in the molecule thereof is preferably used. Examples of R⁵⁰ include a 1,2-propylene group and a 1,3-propylene group.

As the non-ionic surfactant, a compound having an HLB of 9.0 or less is preferably used. Notably, HLB refers to a hydrophilic-lipophilic balance and a value varying in response to the equilibrium between a hydrophilic group and an oleophilic group in the relevant molecule. The greater the value of HLB, the higher the hydrophobicity. In the present specification, the HLB value is a value determined by the calculation formula proposed by Griffin (Griffin formula; 20×(the total formula weight of hydrophilic portions (e.g., an alkyl ether portion) in a surfactant/molecular weight of the surfactant)). In the case where the non-ionic surfactant includes two or more compounds, the weighted average of HLB values of respective components is preferably 9.0 or lower.

From the viewpoint of successfully stabilizing the non-ionic surfactant remaining in the rubber, the HLB value of the non-ionic surfactant is preferably 8.0 or less, more preferably 7.0 or less, still more preferably 6.7 or less, particularly more preferably 6.5 or less. The HLB value of the non-ionic surfactant is 0 or greater. Adjusting the HLB value of the non-ionic surfactant to satisfy the above conditions is preferred, since a high-performance modified conjugated diene-based polymer (A) can be produced by use of an aqueous solvent, when the modified conjugated diene-based polymer (A) is isolated in the subsequent solvent removal step.

The non-ionic surfactant content of the present composition, with respect to 100 parts by mass of the modified conjugated diene-based polymer (A), is 0 to 5 parts by mass. When the non-ionic surfactant content exceeds 5 parts by mass, generally, the mechanical strength and fuel efficiency of the cross-linked product produced by use of the present composition are impaired, and the effect of enhancing the over-time stability of the polymer composition which effect is attributed to incorporation of the acid component (B) fails to sufficiently be achieved. From such viewpoints, the non-ionic surfactant content, with respect to 100 parts by mass of the modified conjugated diene-based polymer (A), is more preferably 4 parts by mass or lower, still more preferably 3 parts by mass or lower. Also, in the case where the mechanical strength and fuel efficiency of the cross-linked product produced is to be enhanced through incorporation of the non-ionic surfactant, the non-ionic surfactant content, with respect to 100 parts by mass of the modified conjugated diene-based polymer (A), is preferably 0.1 parts by mass or higher. The non-ionic surfactant may be used singly or in combination of two or more species.

### <Component (D): Extender oil>

The polymer composition may contain, as an oil for oil extension (i.e., an extender oil), a process oil which is generally used for extending elastomer. Examples of preferred process oils include various oils known in the art. Specific examples include aromatic oil, paraffin oil, naphthene oil, and vegetable oil (e.g., soybean oil and sunflower oil). Examples further include oils having low polycyclic aromatic compound content (i.e., low-PCA oils) such as a mild extraction solvate (MES), a treated distillate aromatic extract (TDAE), and a special residual aromatic extract (SRAE); and heavy naphthene oil. Examples of commercial products of MES, TDAE, and SRAE include Catenex SNR (heavy paraffin obtained by dewaxing a distilate with solvent) (product of Shell) as MES; Vivatec 500 (product of H&R Wasag AG) as TDAE; and NC140 (product of Japan Energy Corp.) as SRAE.

When the extender oil is incorporated into the present composition, from the viewpoint of enhancing processability, while a drop in low rolling resistance and mechanical strength is suppressed, the extender oil content of the present composition, with respect to 100 parts by mass of the modified conjugated diene-based polymer (A) contained in the present composition, is preferably 0.05 to 50 parts by mass. The extender oil content, with respect to 100 parts by mass of the modified conjugated diene-based polymer (A), is more preferably 0.1 parts by mass or higher, still more preferably 0.2 parts by mass or higher. Also, the extender oil content, with respect to 100 parts by mass of the modified conjugated diene-based polymer (A), is more preferably 47 parts by mass or lower, still more preferably 45 parts by mass or lower.

The present composition is a composition which contains the modified conjugated diene-based polymer (A) and the acid component (B), and contains a non-ionic surfactant and an extender oil as optional components. Since the non-ionic surfactant is an optional component, the non-ionic surfactant content of the present composition may be 0 mass%. Similarly, since the extender oil is an optional component, the extender oil content of the present composition may be 0 mass%.

In the present composition, the total amount of the modified conjugated diene-based polymer (A), the acid component (B), the non-ionic surfactant, and the extender oil is 95 mass% or more the entire amount of the composition. In the present composition, the total amount of the modified conjugated diene-based polymer (A), the acid component (B), the non-ionic surfactant, and the extender oil is preferably 97 mass% or more, more preferably 98 mass% or more the entire amount of the composition. One embodiment of the present composition is a solid polymer composition formed by removing solvent. The present composition may be in the form of solid particle (crumb), or of rubber bale obtained by compression-molding of crumbs into a shape of interest (e.g., rectangular parallelpiped).

### <<Polymer composition production method>>

The present composition is preferably produced through a method including the following mixing step and solvent removal step:
Mixing step: a step of mixing the modified conjugated diene-based polymer (A) with the acid component (B) in an organic solvent so that the ratio of the acid component (B) with respect to 100 parts by mass of the modified conjugated diene-based polymer (A) is adjusted to 0.1 to 20 parts by mass, to thereby prepare a mixture; and
Solvent removal step: a step of removing the organic solvent from the liquid mixture obtained in the mixing step (hereinafter may also be referred to as a "liquid mixture SC").

The steps will next be described in detail.

### <Mixing step>

In the mixing step, the modified conjugated diene-based polymer (A) and the acid component (B) are mixed together in an organic solvent. Examples of the organic solvent include organic solvents exemplified as the solvent which can be used in polymerization of a monomer or monomers. As the organic solvent, at least one species selected from the group consisting of a chain aliphatic hydrocarbon, an alicyclic hydrocarbon, and an aromatic hydrocarbon is preferably used.

From the viewpoints of enhancing dispersibility of the acid component (B) in the present composition, and enhancing over-time stability of the present composition, in the mixing step, a solution containing the modified conjugated diene-based polymer (A) dissolved in the organic solvent (hereinafter may also be referred to as a "polymer solution SA") is preferably mixed with the acid component (B).

As the polymer solution SA, a reaction solution containing the modified conjugated diene-based polymer (A) yielded through the steps including the aforementioned polymerization step and modification step may be used as is, or may be a solution prepared by isolating the modified conjugated diene-based polymer (A) present in the reaction solution and dissolving the isolated product in an appropriate solvent. In an industrial aspect, from the viewpoint of reducing the number of steps to achieve higher productivity, the reaction solution containing the modified conjugated diene-based polymer (A) yielded through the aforementioned modification step is preferably used as the polymer solution SA without any further treatment. Notably, the above detailed descriptions are applicable to the polymerization step and the modification step.

The relative amount of the modified conjugated diene-based polymer (A) in the polymer solution SA, with respect to the entire amount of the polymer solution SA, is preferably 1 mass% or more, more preferably 2 mass% or more, still more preferably 3 mass% or more. Also, the relative amount of the modified conjugated diene-based polymer (A) in the polymer solution SA is preferably 90 mass% or less, more preferably 50 mass% or less, still more preferably 30 mass% or less. By adjusting the modified conjugated diene-based polymer (A) content of the polymer solution SA to 1 mass% or higher, the amount of production of the present composition can be sufficiently secured. Also, when the content is tuned to 90 mass% or less, the acid component (B) can be uniformly dispersed in the polymer solution SA, whereby quality and stability of the formed polymer composition can be enhanced.

No particular limitation is imposed on the format of mixing the modified conjugated diene-based polymer (A) with the acid component (B). For example, when the acid component (B) is added to the polymer solution SA containing the modified conjugated diene-based polymer (A), examples of the formation of addition include one-batch addition of the acid component (B), addition in a divided manner, and continuous addition, to the polymer solution SA. Also, when the acid component (B) is added to the polymer solution SA, an undiluted acid component (B) solution as is may be added, or a diluted solution obtained by dissolving the undiluted solution of the acid component (B) with an organic solvent which can solve the component (B) may be added. After addition of the acid component (B) to the polymer solution SA, the acid component (B) is preferably dispersed uniformly in the polymer solution SA through stirring or the like. The temperature at which the polymer solution SA and the acid component (B) are mixed, similar to the aforementioned polymerization reaction temperature, is preferably -20°C to 150°C, more preferably 0 to 120°C, still more preferably 20 to 100°C.

Meanwhile, in the case where an extender oil is incorporated into the present composition, no particular limitation is imposed on the mode of adding the extender oil. In one possible manner, an extender oil is added to a polymer solution containing the modified conjugated diene-based polymer (A) after polymerization, and then the solvent is removed in the subsequent solvent removal step, to thereby form an oil-extended rubber to be added. In this case, the extender oil may be added before adding the acid component (B) into the polymer solution. Alternatively, after addition of the acid component (B) to the polymer solution, and the extender oil may be added. Needless to say, the extender oil may be directly added during a kneading process for yielding a rubber compound (i.e., compounded rubber).

Also, in the case where a non-ionic surfactant is incorporated into the present composition, preferably, the modified conjugated diene-based polymer (A), the acid component (B), a non-ionic surfactant were mixed together in an organic solvent, and then the solvent is removed in the subsequent solvent removal step. By mixing the non-ionic surfactant with the modified conjugated diene-based polymer (A) before conducing the solvent removal step, the non-ionic surfactant can be maintained in the modified conjugated diene-based polymer (A). In this case, the non-ionic surfactant may be added before adding the acid component (B) to the polymer solution, or after addition of the acid component (B) to the polymer solution.

In mixing of the modified conjugated diene-based polymer (A) with the acid component (B), the relative amount of the acid component (B), with respect to 100 parts by mass of the modified conjugated diene-based polymer (A), is preferably adjusted to 0.1 to 20 parts by mass. When the relative amount of the acid component (B), with respect to 100 parts by mass of the modified conjugated diene-based polymer (A) is less than 0.1 parts by mass, the effect of improving the over-time stability of the polymer composition cannot fully be attained. Also, when the relative amount of the acid component (B), with respect to 100 parts by mass of the modified conjugated diene-based polymer (A) is in excess of 20 parts by mass, a drop in performance of the modified conjugated diene-based polymer (A) is readily evoked. From such viewpoints, the acid component (B) content, with respect to 100 parts by mass of the modified conjugated diene-based polymer (A) is preferably 0.15 parts by mass or higher, more preferably 0.2 parts by mass or higher. Also, the acid component (B) content, with respect to 100 parts by mass of the modified conjugated diene-based polymer (A) is preferably 15 parts by mass or lower, more preferably 10 parts by mass or lower.

### <Solvent removal step>

In the solvent removal step, the solvent is removed from the liquid mixture SC, to thereby isolate the polymer composition. No particular limitation is imposed on the method of removing the solvent from the liquid mixture SC, and solvent removal may be conducted through a known solvent removal method, for example, a method including separating the solvent through steam stripping and dehydrating and drying the resultant polymer composition, a method including vaporizing the solvent by means of a twin-axis extruder or the like, and a direct vaporization method by means of a drum drier or the like. Among these methods, from the viewpoint of easily performing the solvent removal step, a method of removing the solvent by bringing the liquid mixture SC into contact with water is preferred.

According to the production method including the mixing step and the solvent removal step, a solid polymer composition from which the solvent has been removed can be yielded. The thus-obtained polymer composition is a crumb form composition or a rubber bale, containing the modified conjugated diene-based polymer (A) and the acid component (B).

### <<Compounded product>>

The compounded product of the present disclosure (hereinafter may also be referred to as a "present compounded product") is a composition obtained by incorporating the aforementioned polymer composition of the present disclosure and a filler.

### <Component (E): Filler>

The filler is incorporated into the present compounded product for enhancing the mechanical strength of the cross-linked product. Examples of the filler include silica, carbon black, an inorganic compound represented by the following formula (9) (hereinafter may also be referred to as an "inorganic compound (N)"), and a reinforcing fiber (e.g., an inorganic fiber such as glass fiber or carbon fiber, or an organic fiber such as nylon fiber or polyester fiber). Among them, the filler is preferably at least one species selected from the group consisting of silica, carbon black, and an inorganic compound (N).

nM²·mSiOₖ·iH₂O ··· (9)

(In formula (9), M² represents at least one selected from the group consisting of a particular metal which is any of aluminum, magnesium, titanium, and calcium; an oxide of the particular metal; a hydroxide of the particular metal; and a carbonate of the particular metal; n is an integer of 1 to 5; m is an integer of 0 to 10; k is an integer of 2 to 5; and i is an integer of 0 to 10.)

Examples of the silica species include wet silica (hydrous silicate), dry silica (anhydrous silicate), colloidal silica, precipitated silica, calcium silicate, aluminum silicate, and rice husk ash silica. Among them, wet silica is particularly preferred, from the viewpoints of the effect of improving rupture characteristics and the effect of achieving both wet grip performance and low rolling resistance. Also, use of a high dispersible type silica is preferred, from the viewpoints of enhancing dispersibility of silica in the present compounded product and improving physical properties and processability. Notably, the silica species may be used singly or in combination of two or more species. In the present compounded product, the relative amount of silica (the total amount, in the case two or more species of silica are used), with respect to the entire amount of the rubber component contained in the present compounded product as 100 parts by mass, is preferably 5 to 200 parts by mass, more preferably 10 to 150 parts by mass, still more preferably 15 to 120 parts by mass.

As used herein, the term "rubber component" refers to a polymer that can provide, through hardening, a cured product exhibiting rubber elasticity. The cured product exhibits such a property that the product is deformed at room temperature by small force (e.g., elongation by 2-fold or more by stretching at room temperature), and is rapidly returned substantially to the original shape when the force is removed.

No particular limitation is imposed on the carbon black, and examples thereof include GPF, FEF, HAF, ISAF, and SAF. In the present compounded product, the relative amount of carbon black (the total amount, in the case two or more species of carbon black are used), with respect to the entire amount of the rubber component contained in the present compounded product as 100 parts by mass, is preferably 5 to 100 parts by mass, more preferably 5 to 50 parts by mass. In addition to silica and carbon black, various reinforcing fillers such as clay and calcium carbonate may further be added to the present compounded product as inorganic fillers.

Specific examples of the inorganic compound (N) include, in the case of a compound of aluminum as the particular metal, aluminum oxide, alumina monohydrate, aluminum hydroxide, aluminum carbonate, aluminum silicate, and aluminum calcium oxide (e.g., Al₂O₃·CaO·2SiO₄); in the case of a compound of magnesium as the particular metal, magnesium oxide, magnesium hydroxide, magnesium carbonate, magnesium silicate, magnesium calcium silicate (CaMgSiO₄), and talc; in the case of a compound of titanium as the particular metal, titanium oxide; and in the case of a compound of calcium as the particular metal, calcium oxide, calcium hydroxide, calcium carbonate and calcium silicate.

As the filler, one species among silica, carbon black, and the inorganic compound (N) may be used singly. Alternatively, the above species may also be used in combination of two or more species. From the viewpoint of a high effect of improving characteristics of tire by combination with the modified conjugated diene-based polymer (A), the present compounded product preferably contains silica as the filler. Specifically wet silica, dry silica, or colloidal silica is preferably used.

In the present compounded product, the relative amount of the filler (the total amount, in the case two or more species of the filler are used), with respect to the entire amount of the rubber component contained in the present compounded product as 100 parts by mass, is preferably 25 to 300 parts by mass, more preferably 30 to 200 parts by mass, still more preferably 50 to 150 parts by mass.

### <Additional component>

So long as the effects of the present disclosure are not impaired, the present compounded product may further contain a component differing from the aforementioned polymer composition and the filler of the present disclosure (i.e., additional components). The additional components which can be incorporated into the present compounded product will be next described.

### Component (F): Additional rubber component

The present compounded product may further contain a rubber component differing from the modified conjugated diene-based polymer (A) (hereinafter may also be referred to as an "additional rubber component").

No particular limitation is imposed on the type of the additional rubber component, but an unmodified rubber is preferred. Examples of the additional rubber component include butadiene rubber (BR, e.g., high cis BR having a cis-1,4 bond content of 90% or higher), styrene-butadiene rubber (SBR), natural rubber (NR), isoprene rubber (IR), styrene-isoprene copolymer rubber, butadiene-isoprene copolymer rubber, hydrogenated butadiene rubber, hydrogenated styrene-butadiene rubber, and ethylene-butadiene rubber. The amount of the additional rubber component to be added, with respect to the total amount of the rubber components (the modified conjugated diene-based polymer (A) and the additional rubber component) contained in the present compounded product as 100 parts by mass, is preferably 5 to 60 parts by mass, more preferably 10 to 50 parts by mass. Notably, as used herein, the modified conjugated diene-based polymer (A) and the additional rubber component may also be referred to simply as a "rubber component", collectively.

### Component (G): cross-linking agent

Generally, the present compounded product contains a cross-linking agent. Examples of the cross-linking agent include sulfur, halogenated sulfur, an organic peroxide, a quinonedioxime, an organic polyvalent amine compound, and a methylol group-containing alkylphenol resin. Among them, sulfur is generally used. The amount of sulfur to be added, with respect to the total amount of the rubber components contained in the present compounded product as 100 parts by mass, is preferably 0.1 to 5 parts by mass, more preferably 0.5 to 3 parts by mass.

### Component (H): Resin

The present compounded product may contain a thermoplastic or thermosetting resin (hereinafter may also be referred to simply as a "resin (H)"). From the viewpoint of yielding a vulcanized rubber exhibiting various excellent properties (i.e., mechanical strength, wear resistance, and resistance to crack propagation property), the resin (H) is preferably at least one species selected from a styrene-based resin, polyethylene, a C5-type resin, a C9-type resin, a C5/C9-type resin, a dicyclopentadiene-based resin, a dicyclopentadiene/C9-type resin, an alkylphenol-based resin, a terpene-based resin, and a hydrogenated product of any of the resins. From the viewpoint of achieving a high effect of improving various properties (i.e., mechanical strength, wear resistance, and resistance to crack propagation property), a thermoplastic resin is particularly preferably used as the resin (H). The resin (H) may be used singly or in combination of two or more species.

Meanwhile, the styrene-based resin is a polymer obtained from a styrene-based monomer. Among such polymers, preferred is a polymer which includes a structural unit derived from a styrene-based monomer in a relative amount of 20 mol% or more, with respect to the total amount of the monomer units included in the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed by co-polymerizing one single styrene-based monomer, or a copolymer formed by polymerizing two or more species of styrene-based monomers. Also, the styrene-based resin may be a copolymer formed by use of a styrene-based monomer and an additional monomer which can copolymerize with the styrene-based monomer. Examples of the additional monomer include acrylonitriles such as acrylonitrile and methacrylonitrile; unsaturated carboxylic acids such as an acrylic compound and methacrylic acid; unsaturated carboxylate esters such as methyl acrylate and methyl methacrylate; dienes such as chloroprene and butadieneisoprene; olefins such as 1-butene and 1-pentene; and α,β-unsaturated carboxylic acid or an anhydride thereof such as maleic anhydride.

The softening point of the styrene-based resin is preferably 30°C or higher, more preferably 60°C or higher, still more preferably 80°C or higher. When the softening point is 30°C or higher, the effect of improving the anti-crack-propagation property of the cross-linked product obtained from the compounded product tends to be easily attained. The softening point of the styrene resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. Notably, in the present disclosure, the softening point of the styrene resin is determined through a method defined in JIS K 6220-1:2015 by means of a ring and ball softening point apparatus. The temperature at which a ball placed on a sample falls to a base plate by softening the sample is employed as the softening point.

As the styrene-based resin, there may be used a block polymer (thermoplastic elastomer) including a conjugated diene polymer block as a soft segment and a polystyrene block as a hard segment. Use of such a block polymer is preferred, since the effect of improving the anti-crack-propagation property can be further enhanced. In the conjugated diene polymer block contained in the block polymer, a part of C-C double bonds in structural units derived from the conjugated diene compound may be hydrogenated.

Examples of the conjugated diene compound including the aforementioned conjugated diene polymer block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving a higher breaking strength, the ratio of the polystyrene-based block in the aforementioned block polymer is preferably 20 mass% or more. Also, the polystyrene-based block content is preferably 80 mass% or less, more preferably 70 mass% or less. The polystyrene-based block content, conjugated diene polymer block content, and conjugated diene unit content of the block polymer can be calculated by corresponding integral proportions obtained by a ¹H-NMR spectrum.

Specific examples of the aforementioned block polymer include styrene-butadiene block copolymer, styrene-isoprene block copolymer, an epoxidated product of styrene-butadiene block copolymer, styrene-butadiene block copolymer, and a block copolymer in which a part of conjugated diene polymer blocks of a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene styrene block copolymer, and hydrogenated products of these copolymers. Among these block polymers, from the viewpoint of the presence of a sufficient number of cross-linking points, SBS and SIS having a conjugated diene-based polymer block in which a soft segment has not been hydrogenated and an epoxidated product of styrene-butadienestyrene block copolymer are preferably used.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., AlCl₃ or BF₃). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., AlCl₃ or BF₃). Specific examples of the C9-type resin include copolymers mainly formed from indene, methylindene, vinyltoluene, etc. The C5/C9-type resin is a solid polymer (C5/C9-type synthetic petroleum resin) obtained through polymerization of C5 to C9 fractions in the presence of a Friedel-Crafts catalyst (e.g., AlCl₃ or BF₃). Specific examples of the C5/C9-type resin include copolymers mainly formed from, for example, vinyltoluene and indene. From the viewpoint of compatibility with rubber components, the C5/C9-type resin preferably has a low C≥9 component content. Specifically, the C5/C9-type resin preferably has an amount of C≥9 components in the total amount of the resin less than 50 mass%, more preferably 40 mass% or less.

The dicyclopentadiene-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Maruzen Petrochemical Co., Ltd.). Examples of the alkyl-phenolic resin include alkylphenol acetylene resin such as p-tert-butylphenol acetylene resin; and alkylphenol formaldehyde resin of low polymerization degree.

The terpene-based resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene-based resin may also be used. Examples thereof include "Piccolyte" series (A115, S115, etc.) (products of Hercules).

A typical example of the terpene-aromatic compound-based resin is a terpene-phenolic resin. The terpene-phenolic resin may be prepared by reacting a terpene with various phenols in the presence of a Friedel-Crafts catalyst, or by such a process further including condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having a low phenolic content is preferred. The term "low phenol content" refers to the phenolic content of the total amount of the resin being less than 50 mass%, preferably 40 mass% or less. Notably, when a terpene-aromatic compound-based resin, in particular, a terpene-phenolic resin, is used as the resin (H), handling performance can also be enhanced further. Commercial products of the terpene-aromatic compound-based resin may be used. Examples of commercial products include "Tamanol 803L" and "Tamanol 901" (products of Arakawa Chemical Industries, Ltd.).

The amount of the resin (H) to be added is preferably 1 part by mass or more, with respect to 100 parts by mass of the rubber component(s) contained in the present compounded product. Use of the resin (H) in an amount of 1 part by mass or more is suitable, since the effect of improving the wear resistance, breaking strength, and anti-crack-propagation property of the cross-linked product obtained from the compounded product can be satisfactorily enhanced. The amount of the resin (H) to be added is more preferably 3 parts by mass or more, still more preferably 7 parts by mass or more, with respect to 100 parts by mass of the rubber component(s). From the viewpoint of maintaining characteristics of the compounded product at suitable levels, the amount of the resin (H) to be added is preferably 50 parts by mass or less, more preferably 30 parts by mass or less, still more preferably 25 parts by mass or less, with respect to 100 parts by mass of the rubber component(s) contained in the compounded product. Notably, the resin (H) may be used singly or in combination of two or more species.

### Component (I): Silane coupling agent

The present compounded product may further contain a silane coupling agent. When the present compounded product contains silica, further incorporation of a silane coupling agent successfully leads to further enhancement in the reinforcing effect by virtue of silica. No particular limitation is imposed on the silane coupling agent, but a sulfur-containing silane coupling agent is preferred. Examples of the sulfur-containing silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, 3-octanoylthiopropyltriethoxysilane, and (3-[ethoxybis(3,6,9,12,15-pentaoxaoctacosan-1-yloxy)silyl]-1-propanethiol, NXT, and NXT-Z (product of Momentive).

When the silane coupling agent is incorporated into the present compounded product, the amount of the silane coupling agent to be added is preferably 1 to 20 parts by mass with respect to 100 mass of silica. By controlling the amount of the silane coupling agent to be added to 1 part by mass or more, with respect to 100 parts by mass of silica, the effect of improving dispersibility of can fully be attained. In contrast, when the amount of the silane coupling agent to be added is adjusted to 20 parts by mass or less, with respect to 100 parts by mass of silica, dispersibility in the compounded product can be improved, while processability of the compounded product and elongation at break of the cross-linked body are maintained at suitable levels. In the present compounded product, the amount of the silane coupling agent to be added, with respect to 100 parts by mass of silica, is more preferably 5 to 15 parts by mass. The silane coupling agent may be used singly or in combination of two or more species.

### Component (D): Extender oil

The present compounded product may contain, as an oil for extending (i.e., an extender oil), a process oil which is generally used for extending elastomer. No particular limitation is imposed on the method of adding the process oil. In one possible procedure, a process oil is directly added to a mixture in kneading for producing a rubber compound, which is one embodiment of the present compounded product. Examples of preferred process oil include various oils known in the art, and are the same oils exemplified as the extender oil which may be incorporated as an optional component into the polymer composition of the present disclosure. The amount of the process oil to be added is preferably 0.05 to 100 parts by mass, with respect to the total amount of rubber components contained in the present compounded product as 100 parts by mass.

In addition to the aforementioned components, various additives which are generally employed in compounded products used for producing cross-linked products such as tires may be added to the present compounded product. Examples of such additives include an antioxidant, zinc flower, stearic acid, a softening agent, sulfur, a vulcanization accelerator, a compatibilizer, a vulcanization aid, a processing aid, and an anti-scorching agent. The amount of each additive may be appropriately determined in accordance with each component, so long as the effects of the present disclosure are not impaired.

The present compounded product can be produced by adding any of the aforementioned components in accordance with needs to the polymer composition of the present disclosure. The present compounded product can be yielded by adding various additives which are optionally employed in compounded products used for producing a cross-linked product (i.e., vulcanized rubber) to the polymer composition of the present disclosure, and kneading the resultant mixture by means of a kneader such as an open-type kneader (e.g., a roller) or a closed-type kneader (e.g., a Banbury mixer).

### <<Method of producing cross-linked product>>

After molding, the cross-linked product (i.e., vulcanized rubber) can be yielded by cross-linking (or vulcanizing) the compounded product obtained in the above procedure. The vulcanized rubber may be yielded through, for example, a method including the following kneading step.

### ·Kneading step

In the kneading step, firstly, the aforementioned polymer composition (i.e., the present composition) and an additive other than additives for vulcanization (a cross-linking agent, a vulcanization accelerator, and a vulcanization aid) (hereinafter may also be referred to as a "first additive") are melt-kneaded by means of a kneader (a first step). Preferably, the first additive at least includes a filler. The kneading temperature employed in the first step may be appropriately set in accordance with the melting point, glass transition temperature, etc. of a polymer component. Through melt kneading, the first additive is mixed with the polymer component. As a result, there can be satisfactorily attained the effects, for example, the mechanical strength of a rubber product after vulcanization is enhanced; a suitable kneading processability of the polymer composition is achieved; and deterioration of rubber possibly caused by radicals generated in kneading is prevented.

Subsequently, in accordance with needs, the temperature of the kneaded product obtained in the first step is returned to room temperature. Then, an additive for vulcanization is added to the kneaded product, and the resultant mixture is subjected to melt kneading by means of a kneader (a second step). The compounded product obtained in the second step is molded, and then subjected to cross-linking (vulcanization), to thereby yield a cross-linked product.

### <<Cross-linked product and tire>>

The cross-linked product obtained from the present composition can be applied to various rubber products and articles. Examples of such rubber products and articles include tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibrationproof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to the present composition, there can be yielded a cross-linked product which exhibits a suitable tensile property, small rolling resistance, and excellent low fuel consumption. Thus, particularly, the present composition is suited for a material for forming one or both of treads and sidewalls of tires.

Production of tires may be carried out through any customary method. In one procedure, a mixture of the polymer composition of the present disclosure with optionally added components (i.e., the compounded product of the present disclosure) is kneaded by means of a kneader, and the kneaded product is formed into a sheet. The sheet is placed at a predetermined position through a customary method, followed by performing vulcanization molding. As a result, rubber treads or rubber sidewalls or both are formed, to thereby yield a pneumatic tire.

According to the present disclosure as described above, the following means are provided.

### [Means 1]

A polymer composition containing a modified conjugated diene-based polymer and an acid component, and containing, as an optional component, one or both of a non-ionic surfactant and an extender oil, wherein the acid component is an acid or a metal salt of the acid or both; the acid component content, with respect to 100 parts by mass of the modified conjugated diene-based polymer, is 0.1 to 20 parts by mass; the non-ionic surfactant content, with respect to 100 parts by mass of the modified conjugated diene-based polymer, is 0 to 5 parts by mass; the extender oil content, with respect to 100 parts by mass of the modified conjugated diene-based polymer, is 0 to 50 parts by mass; the total amount of the modified conjugated diene-based polymer, the acid component, the non-ionic surfactant, and the extender oil, with respect to the entire composition, is 95 mass% or more; and the modified conjugated diene-based polymer has a partial structure derived from a compound (M) having a nitrogen-containing group and two or more hydrocarbyloxysilyl groups.

### [Means 2]

A polymer composition according to [Means 1], wherein the nitrogen-containing group is at least one species selected from the group consisting of a protected primary amino group, a protected secondary amino group, a tertiary amino group, an imino group, and an imidazolyl group.

### [Means 3]

A polymer composition according to [Means 1] or [Means 2], wherein the modified conjugated diene-based polymer has a partial structure derived from the compound (M), and a plurality of conjugated diene-based polymer chains bound to the partial structure derived from the compound (M).

### [Means 4]

A polymer composition according to [Means 3], wherein an end of at least a part of the plurality of conjugated diene-based polymer chains includes a partial structure derived from a nitrogen-containing compound.

### [Means 5]

A polymer composition according to any of [Means 1] to [Means 4], wherein the acid including the acid component has a pH at 20°C of 2 to 5.

### [Means 6]

A polymer composition according to any of [Means 1] to [Means 5], wherein the acid component has a solubility in cyclohexane at 25°C of 1.0 g/L or higher.

### [Means 7]

A polymer composition according to any of [Means 1] to [Means 6], wherein the acid including the acid component is an organic acid.

### [Means 8]

A polymer composition according to any of [Means 1] to [Means 7], which composition contains the non-ionic surfactant in an amount of 0.1 parts by mass to 5 parts by mass, with respect to 100 parts by mass of the modified conjugated diene-based polymer.

### [Means 9]

A compounded product containing a polymer composition as recited in any of [Means 1] to [Means 7], and a filler.

### [Means 10]

A compounded product according to [Means 9], which further containing a resin.

### [Means 11]

A cross-linked product formed by cross-linking a compounded product as recited in [Means 9] or [Means 10].

### [Means 12]

A tire having a tread or a sidewall or both, wherein the tread or the sidewall or both are formed by use of a compounded product as recited in [Means 9] or [Means 10].

### [Means 13]

A method for producing a polymer composition, the method comprising a step of mixing a modified conjugated diene-based polymer with an acid component, at a ratio of 0.1 to 20 parts by mass of the acid component with respect to 100 parts by mass of the modified conjugated diene-based polymer, in an organic solvent, to thereby yield a mixture; and a step of removing solvent from the mixture, wherein the acid component is an acid or a metal salt of the acid or both; and the modified conjugated diene-based polymer has a partial structure derived from a compound (M) having a nitrogen-containing group and two or more hydrocarbyloxysilyl groups.

### [Means 14]

A method for producing a polymer composition according to [Means 13], the method further including a step of polymerizing a monomer including a conjugated diene compound in the presence of at least one species selected from the group consisting of an alkali metal compound and an alkaline earth metal compound, to thereby yield a conjugated diene-based polymer having an active end; and a step of reacting the conjugated diene-based polymer having an active end, with a compound (M) having one or more nitrogen-containing groups selected from the group consisting of a protected primary amino group, a protected secondary amino group, a tertiary amino group, an imino group, and an imidazolyl group, and two or more hydrocarbyloxysilyl groups, to thereby yield the modified conjugated diene-based polymer.

### Examples

The present disclosure will next be described in detail by way of examples, which should not be construed as limiting the disclosure thereto. Unless otherwise specified, "part(s)" and "%" in the Synthesis Examples, Examples, and Comparative Examples are on the mass basis. Physical properties of each polymer and polymer composition P (i.e., polymer composition before addition of a filler) were measured through the following methods.

·Bound styrene content (%): calculated through 400 MHz ¹H-NMR by use of heavy chloroform as a solvent.
·Vinyl group content (%): determined through 400 MHz ¹H-NMR.
·Weight average molecular weight and molecular weight distribution of polymer: measuring a molecular weight (reduced to polystyrene) chart obtained by means of a gel permeation chromatograph (GPC) (i.e., GPC curve) and determining on the basis of the chart. Specific GPC measurement conditions are as follows.

### (Measurement conditions)

Chromatograph: HLC-8020 (product of Tosoh Corporation)
Column: GMH-HR-H (product of Tosoh Corporation). Two columns were connected in series.
Detector: Differential refractometer RI-8020 (product of Tosoh Corporation)
Eluent: Tetrahydrofuran
Column temperature: 40°C
Flow rate: 1.0 mL/min
Sample concentration: 10 mg/20mL

### ·Mooney viscosity (ML1+4, 100°C):

The below-mentioned polymer composition P was employed as a measurement sample, and the viscosity was measured by means of a Mooney tester (product of Alpha technology). In accordance with JIS K6300 (ISO289-1) and ISO289-4, firstly, the sample was preliminarily heated at 100°C for 1 minute, and then the sample was rotated by means of a rotor at 2 rpm. Four minutes after, a torque was measured. The measurement value was employed as a Mooney viscosity (ML(1+4)). The smaller the value of Mooney viscosity, the more suitable the processability of the polymer composition. Notably, the MV value of each polymer composition P serving as a measurement sample measured immediately after drying by means of a heat roller was employed as a "as produced MV". In the same manner, MV of each polymer composition P serving as a measurement sample was measured after drying by means of a heat roller and storage at 25°C for 90 days. The MV value was employed as "90-day production MV". By subtracting "as produced MV" from "90-day production MV", a variation in MV (or MV variation) was derived, and the ratio of MV variation to as produced MV was employed as a percent MV variation (%). The smaller the percent MV variation, the lower the over-time performance deterioration of the polymer composition.

### ·pH

### pH of organic acid:

The pH of a liquid prepared by mixing an acid (1.0 g) and purified water (1.0 L) was measured at 20°C by means of a pH meter (product of HORIBA, Ltd.). In the case of an organic acid salt, the pH of the acid forming the salt was measured.

### pH of inorganic acid:

The pH of a 0.1-mol/L aqueous solution of the acid employed was measured at 20°C in the same manner as employed above.

### ·Solubility

An acid or a metal salt thereof (1.0 g) was added to cyclohexane (1.0 L), and the system was tightly closed. The contents were mixed at 25°C for 5 minutes. The resultant liquid mixture was allowed to stand for 10 minutes, and then the state of the liquid mixture was visually observed. When phase separation or dissolution residue was observed in the liquid mixture, the solubility of the acid or the metal salt thereof in cyclohexane was assessed as lower than 1.0 g/L. When no phase separation or dissolution residue was observed, the solubility of the acid or the metal salt thereof in cyclohexane was assessed as 1.0 g/L or higher.

### 1. Synthesis of (modified) conjugated diene-based polymer and production of polymer composition P

### [Example 1: Synthesis of modified conjugated diene-based polymer A1 and production of polymer composition P1]

To an autoclave reactor (capacity: 5 L) with a nitrogen atmosphere, cyclohexane (2,500 g), tetrahydrofuran (50 g) serving as a vinyl group content-regulating agent (i.e., a randomizer), and styrene (50 g) and 1,3-butadiene (400 g) serving as monomers were added. The temperature of the contents of the reactor was adjusted to 20°C, and then n-butyllithium (5.2 mmol) serving as a polymerization initiator was added thereto, to thereby initiate polymerization. Polymerization was performed under adiabatic conditions. The reached highest temperature was 85°C.

After confirmation of the polymerization conversion to 99% (specifically, 25 minutes after initiation of polymerization), 1,3-butadiene (50 g) was added over 5 minutes. Thereafter, the compound represented by the following formula (N-Si-1) (1.0 mmol) was added thereto, and the mixture was stirred for 10 minutes, to thereby yield a polymer solution containing a modified conjugated diene-based polymer (hereinafter referred to as a polymer solution SA1). To the polymer solution SA1, 2,6-di-tert-butyl-p-cresol (4.4 g) serving as an antioxidant and 2-ethylhexanoic acid (0.50 g) were sequentially added, to thereby prepare a liquid mixture (hereinafter referred to as a "liquid mixture SC1"). Subsequently, the liquid mixture SC1 was subjected to the following solvent removal treatment under the following "solvent removal conditions", to thereby yield a rubber-form substance. The thus-obtained rubber-form substance was dried by means of a heat roller whose temperature was adjusted to 110°C, to thereby yield a modified conjugated diene-based polymer A1 and a polymer composition P1 containing 2-ethylhexanoic acid.

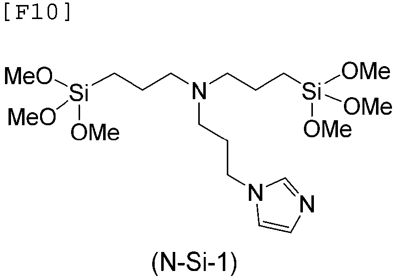

### [Solvent removal conditions]

The liquid mixture SC1 (200 g) and deionized water (300 g) were put into a pressure container, and removal or solvent was conducted through stream stripping (steam temperature: 190°C) for 60 minutes.

Table 1 shows physical properties and the like of the modified conjugated diene-based polymer A1 and the polymer composition P1. Notably, in the case of the modified conjugated diene-based polymer A1, the physical properties were determined through employing a measurement sample which was a polymer yielded by recovering an aliquot of the polymer solution SA1, and the aliquot was subjected to solvent removal at 60°C and 0.1 mmHg for 24 hours.

### [Examples 2 to 12, and 19, and Comparative Example 2]

The procedure of Example 1 including polymerization, solvent removal, and drying was repeated, except that the type and amounts of the raw materials were changed to those shown in Tables 1 to 3, to thereby yield modified conjugated diene-based polymers A2 to A12, A19, and A25, and polymer compositions P2 to P12, P19, and P25, respectively. In Tables 1 to 3, the proportions of the components in the polymer composition are values determined from the corresponding amounts thereof actually added. Tables 1 to 3 show the physical properties and the like of the modified conjugated diene-based polymers A2 to A12, A19, and A25, and the polymer compositions P2 to P12, P19, and P25.

### [Example 13]

To an autoclave reactor (capacity: 5 L) with a nitrogen atmosphere, cyclohexane (2,500 g), N-trimethylsilylpiperazine (4.3 mmol) serving as an initiation terminal modifier, tetrahydrofuran (50 g) serving as a vinyl group content-regulating agent (i.e., a randomizer), and styrene (50 g) and 1,3-butadiene (400 g) serving as monomers were added. The temperature of the contents of the reactor was adjusted to 20°C, and then n-butyllithium (5.2 mmol) was added thereto, to thereby initiate polymerization. Polymerization was performed under adiabatic conditions. The reached highest temperature was 85°C.

After confirmation of the polymerization conversion to 99% (specifically, 25 minutes after initiation of polymerization), 1,3-butadiene (50 g) was added over 5 minutes. Thereafter, the compound represented by the above formula (N-Si-1) (1.0 mmol) was added thereto, and the mixture was stirred for 10 minutes, to thereby yield a polymer solution containing a modified conjugated diene-based polymer (hereinafter referred to as a polymer solution SA13). To the polymer solution SA13, 2,6-di-tert-butyl-p-cresol (4.4 g) serving as an antioxidant and 2-ethylhexanoic acid (5.0 g) were sequentially added, to thereby prepare a liquid mixture (hereinafter referred to as a "liquid mixture SC13"). Subsequently, the liquid mixture SC13 was subjected to the following solvent removal treatment under the aforementioned "solvent removal conditions", to thereby yield a rubber-form substance. The thus-obtained rubber-form substance was dried by means of a heat roller whose temperature was adjusted to 110°C, to thereby yield a modified conjugated diene-based polymer A13 and a polymer composition P13 containing 2-ethylhexanoic acid. Table 2 shows physical properties and the like of the modified conjugated diene-based polymer A13 and the polymer composition P13.

### [Example 14]

The same polymerization, solvent removal, and drying procedures as employed in Example 3 were repeated, except that polyoxyalkylene alkylamine ("FT-6020J", product of Lion Specialty Chemicals, Co., Ltd.) (5.0 g) serving as a non-ionic surfactant was added after addition of 2-ethylhexanoic acid, to thereby yield a modified conjugated diene-based polymer A14 and a polymer composition P14. Table 2 shows physical properties and the like of the modified conjugated diene-based polymer A14 and the polymer composition P14.

### [Examples 15 and 16]

The same polymerization, solvent removal, and drying procedures as employed in Example 3 were repeated, except that the type and amount of the non-ionic surfactant were changed as shown in Table 2, to thereby yield modified conjugated diene-based polymers A15 and A16 and polymer compositions P15 and P16. Table 2 shows physical properties and the like of the modified conjugated diene-based polymers A15 and A16 and the polymer compositions P15 and P16.

### [Example 17]

The same polymerization, solvent removal, and drying procedures as employed in Example 13 were repeated, except that polyoxyalkylene alkylamine ("FT-6020J", product of Lion Specialty Chemicals, Co., Ltd.) (5.0 g) serving as a non-ionic surfactant was added after addition of 2-ethylhexanoic acid, to thereby yield a modified conjugated diene-based polymer A17 and a polymer composition P17. Table 2 shows physical properties and the like of the modified conjugated diene-based polymer A17 and the polymer composition P17.

### [Example 18]

To an autoclave reactor (capacity: 5 L) with a nitrogen atmosphere, cyclohexane (2,500 g), N-trimethylsilylpiperazine (4.3 mmol) serving as an initiation terminal modifier, tetrahydrofuran (50 g) serving as a vinyl group content-regulating agent (i.e., a randomizer), and styrene (50 g) and 1,3-butadiene (400 g) serving as monomers were added. The temperature of the contents of the reactor was adjusted to 20°C, and then n-butyllithium (5.2 mmol) serving as a polymerization initiator was added thereto, to thereby initiate polymerization. Polymerization was performed under adiabatic conditions. The reached highest temperature was 85°C.

After confirmation of the polymerization conversion to 99% (specifically, 25 minutes after initiation of polymerization), 1,3-butadiene (50 g) was added over 5 minutes. Thereafter, the compound represented by the above formula (N-Si-3) (2.0 mmol) was added thereto, and the mixture was stirred for 10 minutes. Then, n-butyllithium (5.2 mmol) was added thereto, and the mixture was stirred for further 10 minutes, to thereby yield a polymer solution containing a modified conjugated diene-based polymer (hereinafter referred to as a polymer solution SA18). To the polymer solution SA18, 2,6-di-tert-butyl-p-cresol (4.4 g) was added, and then 2-ethylhexanoic acid (5.0 g) was added, to thereby prepare a liquid mixture (hereinafter referred to as a "liquid mixture SC18"). Subsequently, the liquid mixture SC18 was subjected to the following solvent removal treatment under the aforementioned "solvent removal conditions", to thereby yield a rubber-form substance. The thus-obtained rubber-form substance was dried by means of a heat roller whose temperature was adjusted to 110°C, to thereby yield a modified conjugated diene-based polymer A18 and a polymer composition P18 containing 2-ethylhexanoic acid. Table 2 shows physical properties and the like of the modified conjugated diene-based polymer A18 and the polymer composition P18.

### [Comparative Example 1]

The same polymerization, solvent removal, and drying procedures as employed in Example 1 were repeated, except that 2-ethylhexanoic acid was not added, to thereby yield a modified conjugated diene-based polymer A24 and a polymer composition P24. Table 3 shows physical properties and the like of the modified conjugated diene-based polymer A24 and the polymer composition P24.

### [Comparative Example 3]

The same polymerization, solvent removal, and drying procedures as employed in Example 14 were repeated, except that 2-ethylhexanoic acid was not added, to thereby yield a modified conjugated diene-based polymer A26 and a polymer composition P26. Table 3 shows physical properties and the like of the modified conjugated diene-based polymer A26 and the polymer composition P26.

### [Comparative Example 4]

The same polymerization, solvent removal, and drying procedures as employed in Comparative Example 1 were repeated, except that a polymer solution containing a modified conjugated diene-based polymer (i.e., a polymer solution SA27) was obtained through polymerization with polymerization proportions shown in Table 3 and, subsequently, 1-decanol (5.0 g) was added to the polymer solution SA27, to thereby yield a modified conjugated diene-based polymer A27 and a polymer composition P27. Table 3 shows physical properties and the like of the modified conjugated diene-based polymer A27 and the polymer composition P27.

### [Comparative Example 5]

The same polymerization, solvent removal, and drying procedures as employed in Example 13 were repeated, except that 2-ethylhexanoic acid was not added, to thereby yield a modified conjugated diene-based polymer A28 and a polymer composition P28. Table 3 shows physical properties and the like of the modified conjugated diene-based polymer A28 and the polymer composition P28.

### [Comparative Example 6]

The same polymerization, solvent removal, and drying procedures as employed in Example 13 were repeated, except that 2-ethylhexanoic acid was not added after addition of the antioxidant, but polyoxyalkylene alkylamine ("FT-6020J", product of Lion Specialty Chemicals, Co., Ltd.) (5.0 g) was added as a non-ionic surfactant, to thereby yield a modified conjugated diene-based polymer A29 and a polymer composition P29. Table 3 shows physical properties and the like of the modified conjugated diene-based polymer A29 and the polymer composition P29.

### [Comparative Example 7]

The same polymerization, solvent removal, and drying procedures as employed in Example 1 were repeated, except that the type and amounts of the raw materials were changed to those shown in Table 3, to thereby yield an additional conjugated diene-based polymer OA1 and an additional polymer composition OP1. Table 3 shows physical properties and the like of the additional conjugated diene-based polymer OA1 and the additional polymer composition OP1. Notably, N-Si-4 used as a terminal modifier in Comparative Example 7 was a compound having one hydrocarbyloxysilyl group, and the additional conjugated diene-based polymer OA1 is a linear-chain polymer.

**[Table 1]**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| <Production of modified conjugated diene-based polvmer> | | | A1 | A2 | A3 | A4 | A5 | A6 | A7 | A8 | A9 | A10 |
| Solvent | cyclohexane | (g) | 2,500 | 2,500 | 2,500 | 2,500 | 2,500 | 2,500 | 2,500 | 2,500 | 2,500 | 2,500 |
| Vinyl group content- regulating agent | tetrahydrofuran | (g) | 50 | 50 | 50 | 50 | 50 | 50 | 50 | 50 | 50 | 50 |
| Monomer | styrene | (g) | 50 | 50 | 50 | 50 | 50 | 50 | 50 | 50 | 50 | 50 |
| | 1,3-butadiene | (g) | 400 | 400 | 400 | 400 | 400 | 400 | 400 | 400 | 400 | 400 |
| | additional 1,3-butadiene | (g) | 50 | 50 | 50 | 50 | 50 | 50 | 50 | 50 | 50 | 50 |
| Initiation terminal modifier | Ini-1 | (mmol) | | | | | | | | | | |
| Polymerization initiator | n-butyllithium | (mmol) | 5.2 | 5.2 | 5.2 | 5.2 | 5.2 | 5.2 | 5.2 | 5.2 | 5.2 | 5.2 |
| | n-butyllithium (additional) | (mmol) | | | | | | | | | | |
| Terminal modifier | N-Si-1 | (mmol) | 1.0 | | 1.0 | 1.0 | 1.0 | | | 1.0 | | |
| | N-Si-2 | (mmol) | | 1.0 | | | | 1.0 | | | 1.0 | |
| | N-Si-3 | (mmol) | | | | | | | 1.0 | | | 1.0 |
| | N-Si-4 | (mmol) | | | | | | | | | | |
| | N-Si-5 | (mmol) | | | | | | | | | | |
| Physical properties of modified conjugated diene-based polymer | bound styrene content | (%) | 10 | 10 | 10 | 10 | 10 | 10 | 10 | 10 | 10 | 10 |
| | vinyl group content | (%) | 40 | 40 | 40 | 40 | 40 | 40 | 40 | 40 | 40 | 40 |
| | weight average molecular weight after modification | | 672,000 | 672,000 | 672,000 | 672,000 | 672,000 | 672,000 | 672,000 | 672,000 | 672,000 | 684,000 |
| | molecular weight distribution after modification (Mw/Mn) | | 1.48 | 1.48 | 1.48 | 1.48 | 1.48 | 1.48 | 1.48 | 1.48 | 1.48 | 1.46 |
| <Production of polymer composition P> | | | | | | | | | | | | |
| Name of polymer composition P | | | P1 | P2 | P3 | P4 | P5 | P6 | P7 | P8 | P9 | P10 |
| (B) acid of metal salt thereof | type | | b-1 | b-1 | b-1 | b-1 | b-1 | b-2 | b-3 | b-4 | b-5 | b-1 |
| | additive amount | (g) | 0.50 | 1.1 | 5.0 | 50.0 | 100 | 5.0 | 5.0 | 5.0 | 5.0 | 5.0 |
| | pH | | 3 | 3 | 3 | 3 | 3 | 4 | 1 | 3 | 3 | 3 |
| (C) non-ionic surfactant | type | | | | | | | | | | | |
| | additive amount | (g) | | | | | | | | | | |
| | HLB | | | | | | | | | | | |
| (D) extender oil | additive amount | (g) | | | | | | | | | | |
| Composition of polymer composition | (A) modified conjugated diene-based polymer | (parts by mass) | 100 | 100 | 100 | 100 | 100 | 100 | 100 | 100 | 100 | 100 |
| | additional conjugated diene-based polymer | (parts by mass) | | | | | | | | | | |
| | (B) acid of metal salt thereof | (parts by mass) | 0.10 | 0.22 | 1.0 | 10.0 | 20.0 | 1.0 | 1.0 | 1.0 | 1.0 | 1.0 |
| | (C) non-ionic surfactant | (parts by mass) | 0.0 | 0.0 | 0.0 | 0.0 | 0.0 | 0.0 | 0.0 | 0.0 | 0.0 | 0.0 |
| | (D) extender oil | (parts by mass) | 0.0 | 0.0 | 0.0 | 0.0 | 0.0 | 0.0 | 0.0 | 0.0 | 0.0 | 0.0 |
| | antioxidant *4) | (parts by mass) | 0.88 | 0.88 | 0.88 | 0.88 | 0.88 | 0.88 | 0.88 | 0.88 | 0.88 | 0.88 |
| | additional component | type | | | | | | | | | | |
| | | (parts by mass) | | | | | | | | | | |
| | Proportion of total amount of (A), (B), (C), and (D) in polymer composition | (mass%) | 99.1 | 99.1 | 99.1 | 99.2 | 99.3 | 99.1 | 99.1 | 99.1 | 99.1 | 99.1 |
| Physical properties of polymer composition | as produced MV (ML1+4,100°C) | | 75 | 76 | 74 | 72 | 63 | 75 | 80 | 77 | 75 | 79 |
| | 90-day production MV (ML1+4,100°C) | | 85 | 84 | 81 | 77 | 68 | 84 | 105 | 89 | 82 | 87 |
| | variation in MV | | 10 | 8 | 7 | 5 | 5 | 9 | 25 | 12 | 7 | 8 |
| | percent MV variation (%) | | 13 | 11 | 9 | 7 | 8 | 12 | 31 | 16 | 9 | 10 |

**[Table 2]**

| | | | Example 11 | Example 12 | Example 13 | Example 14 | Example 15 | Example 16 | Example 17 | Example 18 | Example 19 |
|---|---|---|---|---|---|---|---|---|---|---|---|
| <Production of modified conjugated diene-based polymer> | | | A11 | A12 | A13 | A14 | A15 | A16 | A17 | A18 | A19 |
| Solvent | cyclohexane | (g) | 2,500 | 2,500 | 2,500 | 2,500 | 2,500 | 2,500 | 2,500 | 2,500 | 2,500 |
| Vinyl group content- regulating agent | tetrahydrofuran | (g) | 50 | 50 | 50 | 50 | 50 | 50 | 50 | 50 | 50 |
| Monomer | styrene | (g) | 50 | 50 | 50 | 50 | 50 | 50 | 50 | 50 | 50 |
| | 1,3-butadiene | (g) | 400 | 400 | 400 | 400 | 400 | 400 | 400 | 400 | 400 |
| | additional 1,3-butadiene | (g) | 50 | 50 | 50 | 50 | 50 | 50 | 50 | 50 | 50 |
| Initiation terminal modifier | Ini-1 | (mmol) | | | 4.3 | | | | 4.3 | 4.3 | 4.3 |
| Polymerization initiator | n-butyllithium | (mmol) | 5.2 | 5.2 | 5.2 | 5.2 | 5.2 | 5.2 | 5.2 | 5.2 | 5.2 |
| | n-butyllithium (additional) | (mmol) | | | | | | | | 5.2 | |
| Terminal modifier | N-Si-1 | (mmol) | | | 1.0 | 1.0 | 1.0 | 1.0 | 1.0 | | |
| | N-Si-2 | (mmol) | 1.4 | 0.7 | | | | | | | |
| | N-Si-3 | (mmol) | | | | | | | | 2.0 | |
| | N-Si-4 | (mmol) | | | | | | | | | |
| | N-Si-5 | (mmol) | | | | | | | | | 1.0 |
| Physical properties of modified conjugated diene-based polymer | bound styrene content | (%) | 10 | 10 | 10 | 10 | 10 | 10 | 10 | 10 | 10 |
| | vinyl group content | (%) | 40 | 40 | 41 | 40 | 40 | 40 | 41 | 40 | 41 |
| | weight average molecular weight after modification | | 494,000 | 800,000 | 658,000 | 672,000 | 672,000 | 672,000 | 658,000 | 396,000 | 663,000 |
| | molecular weight distribution after modification (Mw/Mn) | | 1.38 | 1.56 | 1.5 | 1.48 | 1.48 | 1.48 | 1.5 | 1.49 | 1.46 |
| <Production of polymer composition P> | | | | | | | | | | | |
| Name of polymer composition P | | | P11 | P12 | P13 | P14 | P15 | P16 | P17 | P18 | P19 |
| (B) acid of metal salt thereof | type | | b-1 | b-1 | b-1 | b-1 | b-1 | b-1 | b-1 | b-1 | b-1 |
| | additive amount | (g) | 5.0 | 5.0 | 5.0 | 5.0 | 5.0 | 5.0 | 5.0 | 5.0 | 5.0 |
| | pH | | 3 | 3 | 3 | 3 | 3 | 3 | 3 | 3 | 3 |
| (C) non-ionic surfactant | type | | | | | c-1 | c-2 | c-3 | c-1 | | |
| | additive amount | (g) | | | | 5.0 | 5.0 | 5.0 | 5.0 | | |
| | HLB | | | | | 0.0 | 12.5 | 6.5 | 0.0 | | |
| (D) extender oil | additive amount | (g) | | | | | | | | | |
| Composition polymer of composition | (A) modified conjugated diene-based polymer | (parts by mass) | 100 | 100 | 100 | 100 | 100 | 100 | 100 | 100 | 100 |
| | additional conjugated diene-based polymer | (parts by mass) | | | | | | | | | |
| | (B) acid of metal salt thereof | (parts by mass) | 1.0 | 1.0 | 1.0 | 1.0 | 1.0 | 1.0 | 1.0 | 1.0 | 1.0 |
| | (C) non-ionic surfactant | (parts mass)by | 0.0 | 0.0 | 0.0 | 1.0 | 1.0 | 1.0 | 1.0 | 1.0 | 1.0 |
| | (D) extender oil | (parts mass)by | 0.0 | 0.0 | 0.0 | 0.0 | 0.0 | 0.0 | 0.0 | 0.0 | 0.0 |
| | antioxidant *4) | (parts mass)by | 0.88 | 0.88 | 0.88 | 0.88 | 0.88 | 0.88 | 0.88 | 0.88 | 0.88 |
| | additional component | type | | | | | | | | | |
| | | (parts by mass) | | | | | | | | | |
| | Proportion of total amount of (A), (B), (C), and (D) in polymer composition | (mass%) | 99.1 | 99.1 | 99.1 | 99.1 | 99.1 | 99.1 | 99.1 | 99.1 | 99.1 |
| Physical properties polymer compositionof | as produced MV | | 72 | 85 | 78 | 72 | 73 | 72 | 75 | 70 | 72 |
| | 90-day (ML1+4,100°C)production MV | | 84 | 95 | 88 | 77 | 84 | 77 | 81 | 80 | 81 |
| | variation in MV | | 12 | 10 | 10 | 5 | 11 | 5 | 6 | 10 | 9 |
| | percent MV variation (%) | | 17 | 12 | 13 | 7 | 15 | 7 | 8 | 14 | 13 |

**[Table 3]**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| <Production of (modified) conjugated diene-based polymer> | | | A24 | A25 | A26 | A27 | A28 | A29 | OA1 |
| Solvent | cyclohexane | (g) | 2,500 | 2,500 | 2,500 | 2,500 | 2,500 | 2,500 | 2,500 |
| Vinyl group content- regulating agent | tetrahydrofuran | (g) | 50 | 50 | 50 | 50 | 50 | 50 | 50 |
| Monomer | styrene | (g) | 50 | 50 | 50 | 50 | 50 | 50 | 50 |
| | 1,3-butadiene | (g) | 400 | 400 | 400 | 400 | 400 | 400 | 400 |
| | additional 1,3-butadiene | (g) | 50 | 50 | 50 | 50 | 50 | 50 | 50 |
| Initiation terminal modifier | Ini-1 | (mmol) | | | | | 4.3 | 4.3 | |
| Polymerization initiator | n-butyllithium | (mmol) | 5.2 | 5.2 | 5.2 | 5.2 | 5.2 | 5.2 | 5.2 |
| | n-butyllithium (additional) | (mmol) | | | | | | | |
| Terminal modifier | N-Si-1 | (mmol) | 1.0 | 1.0 | 1.0 | 1.0 | 1.0 | 1.0 | |
| | N-Si-2 | (mmol) | | | | | | | |
| | N-Si-3 | (mmol) | | | | | | | |
| | N-Si-4 | (mmol) | | | | | | | 4.0 |
| Physical properties of (modified) conjugated diene-based polymer | bound styrene content | (%) | 10 | 10 | 10 | 10 | 10 | 10 | 10 |
| | vinyl group content | (%) | 40 | 40 | 40 | 40 | 41 | 41 | 41 |
| | weight average molecular weight after modification | | 672,000 | 672,000 | 672,000 | 672,000 | 658,000 | 658,000 | 195,000 |
| | molecular weight distribution after modification (Mw/Mn) | | 1.48 | 1.48 | 1.48 | 1.48 | 1.5 | 1.5 | 1.2 |
| <Production of polymer composition P> | | | | | | | | | |
| Name of polymer composition P | | | P24 | P25 | P26 | P27 | P28 | P29 | OP1 |
| (B) acid of metal salt thereof | type | | | b-1 | | | | | b-1 |
| | additive amount | (g) | | 0.05 | | | | | 5.0 |
| | pH | | | 3 | | | | | 3 |
| (C) non-ionic surfactant | type | | | | c-1 | | | c-1 | |
| | additive amount | (g) | | | 5.0 | | | 5.0 | |
| | HLB | | | | 0.0 | | | 0.0 | |
| (D) extender oil | additive amount | (g) | | | | | | | |
| Composition polymercomposition of | (A) (modified) conjugated diene-based polymer | (parts by mass) | 100 | 100 | 100 | 100 | 100 | 100 | |
| | additional conjugated diene-based polymer | (parts by mass) | | | | | | | 100 |
| | (B) acid of metal salt thereof | (parts by mass) | 0.0 | 0.01 | 0.0 | 0.0 | 0.0 | 0.0 | 1.0 |
| | (C) non-ionic surfactant | (parts mass)by | 0.0 | 0.0 | 1.0 | 0.0 | 0.0 | 1.0 | 1.0 |
| | (D) extender oil | (parts mass)by | 0.0 | 0.0 | 0.0 | 0.0 | 0.0 | 0.0 | 0.0 |
| | antioxidant *4) | (parts mass)by | 0.88 | 0.88 | 0.88 | 0.88 | 0.88 | 0.88 | 0.88 |
| | additional component | type | | | | 1-decanol | | | |
| | | (parts by mass) | | | | 1.00 | | | |
| | Proportion of total amount of (A), (B), (C), and (D) in polymer composition | (mass%) | 99.1 | 99.1 | 99.1 | 98.2 | 99.1 | 99.1 | 1.9 |
| Physical properties of polymer composition | as produced MV | | 73 | 74 | 72 | 73 | 80 | 76 | 7 |
| | 90-day production MV | | 88 | 88 | 81 | 85 | 108 | 90 | 13 |
| | variation in MV | | 15 | 14 | 9 | 12 | 28 | 14 | 6 |
| | percent MV variation (%) | | 21 | 19 | 13 | 16 | 35 | 18 | 86 |

Abbreviations in Tables 1 to 3 are as follows.
(Initiation terminal modifier)
   Ini-1: N-trimethylsilylpiperazine
(Terminal modifier)
   N-Si-1: a compound represented by the following formula N-Si-1
   N-Si-2: a compound represented by the following formula N-Si-2
   N-Si-3: a compound represented by the following formula N-Si-3
   N-Si-4: N,N-dimethylaminopropylmethyldiethoxysilane
   N-Si-5: a compound represented by the following formula N-Si-5 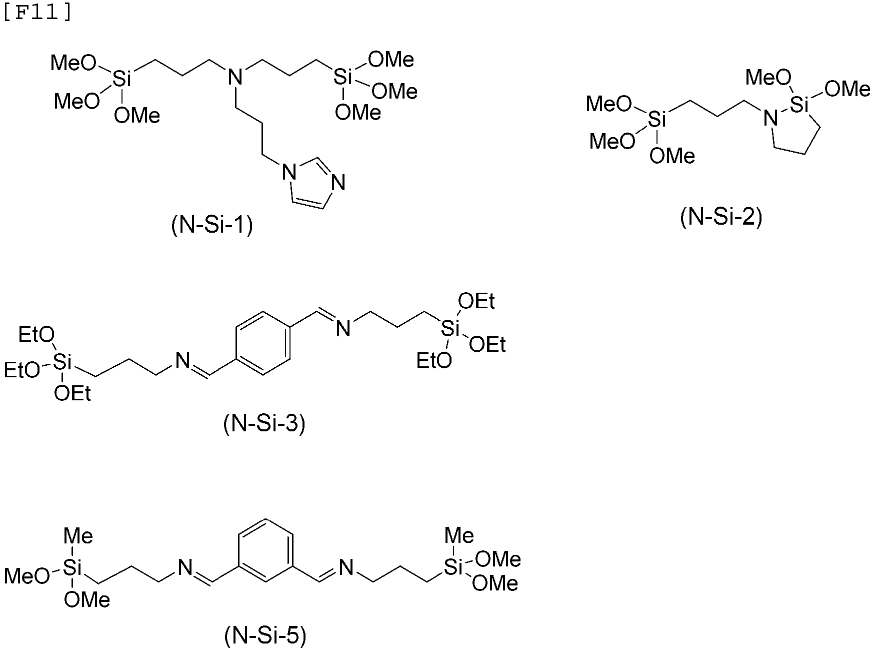
(Acid or metal salt thereof)
   b-1: 2-ethylhexanonic acid (product of Tokyo Chemical Industry, Co., Ltd.)
   b-2: phthalic acid (product of Tokyo Chemical Industry, Co., Ltd.)
   b-3: hydrochloric acid (0.1 mol/L) (product of FUJIFILM Wako Chemicals)
   b-4: bis(2-ethylhexyl) phosphate (product of Tokyo Chemical Industry, Co., Ltd.)
   b-5: tin bis(2-ethylhexanoate) (product of Tokyo Chemical Industry, Co., Ltd.)

Notably, b-1, b-2, b-4, and b-5 have a solubility in cyclohexane at 25°C of 1.0 g/L or higher, and b-3 has a solubility in cyclohexane at 25°C lower than 1.0 g/L.

### (Non-ionic surfactant)

c-1: FT-6020J (product of Lion Specialty Chemicals, Co., Ltd., non-ionic surfactant, polyoxyalkylene alkylamine)
c-2: Nymeen S-210 (product of NOF Corporation, non-ionic surfactant, polyoxyethylene stearylamine)
c-3: Leostat GS-95P (product of Lion Specialty Chemicals, Co., Ltd., non-ionic surfactant, glycerin fatty acid ester)

### [Example 20]

Into an autoclave reactor (first reactor, capacity: 50 L) with a nitrogen atmosphere, 1,3-butadiene (26.6 g/minute) and styrene (2.95 g/minute) serving as monomers, cyclohexane (180.2 g/minute) serving as a solvent, tetrahydrofuran (0.40 g/minute) serving as a vinyl group content-regulating agent (i.e., a randomizer), and n-butyllithium (0.25 mmol/minute) serving as a polymerization initiator were continuously charged. The inside temperature of the reactor was controlled to 75°C. From the first reactor, the polymer solution was continuously discharged at 210.2 g/minute. To the discharged polymer solution, a compound represented by the above formula N-Si-1 was added at 0.05 mmol/minute, and the mixed flow was continuously transferred to a second reactor, where the contents were allowed to react. At the outlet of the second reactor, di-tert-butyl-p-cresol serving as an antioxidant was added so that the amount thereof, with respect to 100 parts by mass of the polymer, was adjusted to 0.88 parts by mass. Subsequently, an extender oil was added at 7.4 g/minute. To the thus-produced polymer solution containing a modified conjugated diene-based polymer A20 (hereinafter referred to as a polymer solution SA20), 2-ethylhexanoic acid was added at 0.295 g/minute, to thereby prepare a liquid mixture (hereinafter referred to as a liquid mixture SC20). Subsequently, the liquid mixture SC20 was subjected to the solvent removal treatment under the aforementioned "solvent removal conditions," to thereby yield a rubber-form substance. The thus-obtained rubber-form substance was dried by means of a heat roller whose temperature was adjusted to 110°C, to thereby yield a modified conjugated diene-based polymer A20 and a polymer composition P20 containing 2-ethylhexanoic acid.

Table 4 shows physical properties and the like of the modified conjugated diene-based polymer A20 and the polymer composition P20. Notably, physical properties of the modified conjugated diene-based polymer A20 were assessed by a specific sample. That is, the sample was obtained by extracting a portion of the polymer solution after adding an anti-ageing agent and before adding the extender oil to the outside the polymerization line and subjecting the portion to solvent removal at 60°C and 0.1 mmHg for 24 hours. The abbreviations in Table 4 are the same as those in Tables 1 to 3.

### [Example 21]

The same polymerization, solvent removal, and drying procedures as employed in Example 20 were repeated, except that tin bis(2-ethylhexanoate) was added instead of 2-ethylhexanoic acid, to thereby yield a modified conjugated diene-based polymer A21 and a polymer composition P21. Table 4 shows physical properties and the like of the modified conjugated diene-based polymer A21 and the polymer composition P21.

### [Example 22]

The same polymerization, solvent removal, and drying procedures as employed in Example 20 were repeated, except that a mixture of n-butyllithium and N-trimethylsilylpiperazine (1/1, by mole) was added at 0.25 mmol/minute as a polymerization initiator instead of n-butyllithium, to thereby yield a modified conjugated diene-based polymer A22 and a polymer composition P22. Table 4 shows physical properties and the like of the modified conjugated diene-based polymer A22 and the polymer composition P22.

### [Example 23]

The same polymerization, solvent removal, and drying procedures as employed in Example 22 were repeated, except that polyoxyalkylene alkylamine ("FT-6020J," product of Lion Specialty Chemicals, Co., Ltd.) serving as a non-ionic surfactant was added after addition of 2-ethylhexanoic acid, so that the amount thereof, with respect to 100 parts by mass of the polymer, was adjusted to 0.88 parts by mass, to thereby yield a modified conjugated diene-based polymer A23 and a polymer composition P23. Table 4 shows physical properties and the like of the modified conjugated diene-based polymer A23 and the polymer composition P23.

### [Comparative Example 8]

The same polymerization, solvent removal, and drying procedures as employed in Example 20 were repeated, except that 2-ethylhexanoic acid was not added, to thereby yield a modified conjugated diene-based polymer A30 and a polymer composition P30. Table 4 shows physical properties and the like of the modified conjugated diene-based polymer A30 and the polymer composition P30.

### [Comparative Example 9]

The same polymerization, solvent removal, and drying procedures as employed in Example 22 were repeated, except that 2-ethylhexanoic acid was not added, to thereby yield a modified conjugated diene-based polymer A31 and a polymer composition P31. Table 4 shows physical properties and the like of the modified conjugated diene-based polymer A31 and the polymer composition P31.

**[Table 4]**

| | | | Example 20 | Example 21 | Example 22 | Example 23 | Comparative Example 8 | Comparative Example 9 |
|---|---|---|---|---|---|---|---|---|
| <Production of modified conjugated diene-based polymer> | | | A20 | A21 | A22 | A23 | A30 | A31 |
| Solvent | cyclohexane | (g/min) | 180.2 | 180.2 | 180.2 | 180.2 | 180.2 | 180.2 |
| Vinyl group content-regulating agent | tetrahydrofuran | (g/min) | 0.40 | 0.40 | 0.40 | 0.40 | 0.40 | 0.40 |
| Monomer | styrene | (g/min) | 2.95 | 2.95 | 2.95 | 2.95 | 2.95 | 2.95 |
| | 1,3-butadiene | (g/min) | 26.6 | 26.6 | 26.6 | 26.6 | 26.6 | 26.6 |
| Polymerization initiator | n-butyllithium | (mmol/min) | 0.25 | 0.25 | | | 0.25 | |
| | lithium amide | (mmol/min) | | | 0.25 | 0.25 | | 0.25 |
| Terminal modifier | N-Si-1 | (mmol/min) | 0.05 | 0.05 | 0.05 | 0.05 | 0.05 | 0.05 |
| Physical properties of modified conjugated diene-based polymer | bound styrene content | (%) | 10 | 10 | 11 | 11 | 10 | 11 |
| | vinyl group content | (%) | 41 | 41 | 40 | 40 | 41 | 40 |
| | weight average molecular weight after modification | | 663,000 | 663,000 | 652,000 | 652,000 | 663,000 | 652,000 |
| | molecular weight distribution after modification (Mw/Mn) | | 2.07 | 2.07 | 2.1 | 2.1 | 2.07 | 2.1 |
| <Production of polymer composition P> | | | | | | | | |
| Name of polymer composition P | | | P20 | P21 | P22 | P23 | P30 | P31 |
| (B) thereofacid of metal salt | type | | b-1 | b-5 | b-1 | b-1 | | |
| | additive amount | (g/min) | 0.295 | 0.295 | 0.295 | 0.295 | | |
| | pH | | 3.0 | 3.0 | 3.0 | 3.0 | | |
| (C) non-ionic surfactant | type | | | | | c-1 | | |
| | amount | parts by mass | | | | 1.0 | | |
| | HLB | | | | | 0.0 | | |
| (D) extender oil | additive amount | (g/min) | 7.4 | 7.4 | 7.4 | 7.4 | 7.4 | 7.4 |
| Composition of polymer composition | (A) diene-based modified conjugatedpolymer | (parts by mass) | 100.0 | 100.0 | 100.0 | 100.0 | 100.0 | 100.0 |
| | (B) acid of metal salt | (parts by mass) | 1.0 | 1.0 | 1.0 | 1.0 | | |
| | (C) non-ionic surfactant | (parts by mass) | | | | 1.0 | | |
| | (D) extender oil | (parts by mass) | 25.0 | 25.0 | 25.0 | 25.0 | 25.0 | 25.0 |
| | antioxidant *4) | (parts by mass) | 0.88 | 0.88 | 0.88 | 0.88 | 0.88 | 0.88 |
| | Proportion of total amount of (A), (B), (C), and (D) in polymer composition | (mass%) | 99.3 | 99.3 | 99.3 | 99.3 | 99.3 | 99.3 |
| Physical properties of polymer composition | as produced MV (ML1+4,100°C) | | 50 | 50 | 52 | 53 | 52 | 54 |
| | 90-day production MV (ML1+4,100°C) | | 56 | 56 | 69 | 58 | 88 | 85 |
| | variation in MV | | 6 | 6 | 17 | 5 | 36 | 31 |
| | percent MV variation (%) | | 12 | 12 | 33 | 9 | 69 | 57 |

### 2. Production of compounded product Q

### [Examples 24 to 48 and Comparative Examples 10 to 18]

According to the formulations shown in Tables 5 to 7, components were compounded, and each of the obtained mixtures was melt-kneaded, to thereby yield a corresponding compounded product Q. Kneading was conducted through the following procedure.

First-stage kneading was conducted by means of a batch-type mixer equipped with a temperature controlling device (Labo Plastomill, product of Toyo Seiki Seisaku-sho, Ltd.) at a predetermined temperature of 100°C and a rotation rate of 60 rpm for a kneading time of 4 minutes. Specifically, the polymer composition P, polybutadiene rubber, an extender oil, silica, carbon black, a silane coupling agent, stearic acid, an antioxidant, and zin oxide were fed and kneaded. Notably, in Example 47, a natural rubber was used instead of polybutadiene rubber. In Examples 42 and 44, polybutadiene rubber and a natural rubber were used in combination, and an additional resin was added. The temperature of the kneaded product discharged through the mixer was about 150°C, in all the cases.

Subsequently, second-stage kneading was conducted. Specifically, a kneaded product obtained in first-stage kneading was cooled to room temperature, and a vulcanization accelerator and sulfur were added to the aforementioned mixer. The contents were kneaded at a predetermined temperature of 70°C and a rotation rate of 60 rpm for a kneading time of 1.5 minutes, to thereby yield compounded products Q (Q1 to Q34, respectively). The temperature of the kneaded product discharged through the mixer was 100°C or lower, in all the cases. Then, each of the obtained compounded products Q was subjected to vulcanization molding at 160°C for a specific time by means of a vulcanization press machine, to thereby yield a vulcanized rubber as a cross-linked product. The thus-obtained vulcanized rubbers were assessed in terms of the following physical properties. Tables 5 to 7 show the results.

### [Compounding property (initial)]

The compounded product Q was produced by use of the as produced polymer composition P through the aforementioned method, and the following physical properties were assessed.

### ·Tensile strength (tensile product)

A sample of vulcanized rubber was subjected to a tensile test in accordance with JIS K6251:2010. The test sample was a dumbbell test piece No. 3. The stress at break (TB, MPa) and elongation at break (EB, %) were measured at room temperature. Based on the tensile product (=(TB×EB)), tensile strength was calculated and evaluated as an index with respect to the tensile strength of Comparative Example 10 as a standard. The greater the value, the greater the tensile strength.

### ·Tangent loss (3% tanδ@50°C, rolling resistance)

The ratio of loss modulus (G'') to storage modulus (G') of a test sample of vulcanized rubber was measured by means of a shear-type dynamic spectrometer (product of TA Instruments) at an angular speed of 100 radians/second, a temperature of 50°C, and a shearing strain of 3% (50°C tanδ). The tangent loss was evaluated as an index with respect to the tangent loss of Comparative Example 10 as a standard (100). The greater the value of tangent loss, the smaller the rolling resistance (i.e., the more suitable fuel consumption).

### -Wet grip performance (0°C tanδ)

The loss coefficient of a test sample of vulcanized rubber was measured by means of ARES-RDA (product of TA Instruments) at a shearing strain of 0.14%, an angular speed of 100 radians/second, and a temperature of 0°C (tanδ (0°C)). The measurement was evaluated as an index with respect to the loss coefficient of Comparative Example 10 as a standard (100). The greater the value, the more suitable the wet grip performance.

### ·Wear resistance (DIN abrasion)

The wear resistance of a test sample of vulcanized rubber was measured in accordance with JIS K6264 by means of a DIN abrasion tester (product of Toyo Seiki Seisaku-sho) at a load of 10 N and a temperature of 25°C. The measurement was evaluated as an index with respect to the wear resistance of Comparative Example 10 as a standard (100). The greater the value, the more suitable the wear resistance.

### [Compounding property (90 days after)]

The compounded product Q was produced by use of the polymer composition P 90 days after production thereof through the aforementioned method, and the physical properties were assessed in the same manner as employed in [Compounding property (initial)]. Notably, the result of each assessment was represented by an index with respect to that of Comparative Example 10 of [Compounding property (initial)] as 100. When [Compounding property (initial)] was compared with [Compounding property (90 days after)], the smaller the drop in the index, the smaller the over-time variation in performance (i.e., the more suitable).

**[Table 5]**

| <Production of compounded product Q> | | | Exam ple 24 | Exam ple 25 | Exam ple 26 | Exam ple 27 | Exam ple 28 | Exam ple 29 | Exam ple 30 | Exam ple 31 | Exam ple 32 | Exam ple 33 | Exam ple 34 | Exam ple 35 |
|---|---|---|---|---|---|---|---|---|---|---|---|---|---|---|
| Name of com pounded product Q | | | Q1 | Q2 | Q3 | Q4 | Q5 | Q6 | Q7 | Q8 | Q9 | Q10 | Q11 | Q12 |
| First-stage kneading | polymer composition | type | P1 | P2 | P3 | P4 | P5 | P6 | P7 | P8 | P9 | P10 | P11 | P12 |
| | | parts by mass | 70 | 70 | 70 | 77 | 84 | 70 | 70 | 70 | 70 | 70 | 70 | 70 |
| | butadiene rubber *1) | parts by mass | 30 | 30 | 30 | 30 | 30 | 30 | 30 | 30 | 30 | 30 | 30 | 30 |
| | natural rubber | parts by mass | 0 | 0 | 0 | 0 | 0 | 0 | 0 | 0 | 0 | 0 | 0 | 0 |
| | resin *2) | parts by mass | 0 | 0 | 0 | 0 | 0 | 0 | 0 | 0 | 0 | 0 | 0 | 0 |
| | silica *3) | parts by mass | 70 | 70 | 70 | 70 | 70 | 70 | 70 | 70 | 70 | 70 | 70 | 70 |
| | carbon black *4) | parts by mass | 5 | 5 | 5 | 5 | 5 | 5 | 5 | 5 | 5 | 5 | 5 | 5 |
| | silane coupling agent *5) | parts by mass | 5.6 | 5.6 | 5.6 | 5.6 | 5.6 | 5.6 | 5.6 | 5.6 | 5.6 | 5.6 | 5.6 | 5.6 |
| | extender oil *6) | parts by mass | 30 | 30 | 30 | 30 | 30 | 30 | 30 | 30 | 30 | 30 | 30 | 30 |
| | stearic acid | parts by mass | 2 | 2 | 2 | 2 | 2 | 2 | 2 | 2 | 2 | 2 | 2 | 2 |
| | zinc oxide | parts by mass | 3 | 3 | 3 | 3 | 3 | 3 | 3 | 3 | 3 | 3 | 3 | 3 |
| | antioxidant *7) | parts by mass | 1 | 1 | 1 | 1 | 1 | 1 | 1 | 1 | 1 | 1 | 1 | 1 |
| Second-stage kneading | vulcanization accelerator D *8) | parts by mass | 1.5 | 1.5 | 1.5 | 1.5 | 1.5 | 1.5 | 1.5 | 1.5 | 1.5 | 1.5 | 1.5 | 1.5 |
| | vulcanization accelerator CZ *9) | parts by mass | 1.8 | 1.8 | 1.8 | 1.8 | 1.8 | 1.8 | 1.8 | 1.8 | 1.8 | 1.8 | 1.8 | 1.8 |
| | sulfur | parts by mass | 1.5 | 1.5 | 1.5 | 1.5 | 1.5 | 1.5 | 1.5 | 1.5 | 1.5 | 1.5 | 1.5 | 1.5 |
| Compoundin g property (initial) | tensile product | INDEX | 105 | 108 | 107 | 100 | 87 | 103 | 103 | 105 | 108 | 108 | 102 | 110 |
| | 3%tanδ@50°C | INDEX | 98 | 99 | 99 | 93 | 88 | 99 | 95 | 99 | 99 | 103 | 101 | 99 |
| | 0°Ctanδ | INDEX | 102 | 101 | 100 | 104 | 104 | 100 | 100 | 101 | 101 | 102 | 100 | 100 |
| | DIN abrasion | INDEX | 103 | 104 | 105 | 98 | 86 | 101 | 98 | 102 | 105 | 108 | 103 | 110 |
| Compoundin g property (90 days after) | tensile product | INDEX | 106 | 107 | 106 | 98 | 86 | 102 | 94 | 97 | 107 | 108 | 100 | 109 |
| | 3%tanδ@50°C | INDEX | 97 | 98 | 98 | 93 | 85 | 95 | 87 | 93 | 98 | 101 | 98 | 98 |
| | 0°Ctanδ | INDEX | 102 | 103 | 103 | 103 | 104 | 99 | 99 | 99 | 101 | 102 | 99 | 98 |
| | DIN abrasion | INDEX | 102 | 103 | 104 | 96 | 85 | 100 | 90 | 101 | 104 | 105 | 101 | 108 |

**[Table 6]**

| <Production of compounded product Q> | | | Exam ple 36 | Exam ple 37 | Exam ple 38 | Exam ple 39 | Exam ple 40 | Exam ple 41 | Exam ple 42 | Exam ple 43 | Exam ple 44 | Exam ple 45 | Exam ple 46 | Exam ple 47 | Exam ple 48 |
|---|---|---|---|---|---|---|---|---|---|---|---|---|---|---|---|
| Name of compounded product Q | | | Q13 | Q14 | Q15 | Q16 | Q17 | Q18 | Q19 | Q20 | Q21 | Q22 | Q23 | Q24 | Q25 |
| First-stage kneading | polymer composition | type | P13 | P14 | P15 | P16 | P17 | P18 | P19 | P20 | P21 | P22 | P23 | P3 | P3 |
| | | parts by mass | 70 | 70 | 70 | 70 | 70 | 70 | 50 | 87.5 | 87.5 | 87.5 | 87.5 | 70 | 70 |
| | butadiene rubber *1) | parts by mass | 30 | 30 | 30 | 30 | 30 | 30 | 30 | 30 | 30 | 30 | 30 | 0 | 15 |
| | natural rubber | parts by mass | 0 | 0 | 0 | 0 | 0 | 0 | 20 | 0 | 0 | 0 | 0 | 30 | 15 |
| | resin *2) | parts by mass | 0 | 0 | 0 | 0 | 0 | 0 | 15 | 0 | 0 | 0 | 0 | 0 | 15 |
| | silica *3) | parts by mass | 70 | 70 | 70 | 70 | 70 | 70 | 110 | 70 | 70 | 70 | 70 | 70 | 70 |
| | carbon black *4) | parts by mass | 5 | 5 | 5 | 5 | 5 | 5 | 5 | 5 | 5 | 5 | 5 | 5 | 5 |
| | silane coupling agent *5) | parts by mass | 5.6 | 5.6 | 5.6 | 5.6 | 5.6 | 5.6 | 8.8 | 5.6 | 5.6 | 5.6 | 5.6 | 5.6 | 5.6 |
| | extender oil *6) | parts by mass | 30 | 30 | 30 | 30 | 30 | 30 | 15 | 12.5 | 12.5 | 12.5 | 12.5 | 30 | 15 |
| | stearic acid | parts by mass | 2 | 2 | 2 | 2 | 2 | 2 | 2 | 2 | 2 | 2 | 2 | 2 | 2 |
| | zinc oxide | parts by mass | 3 | 3 | 3 | 3 | 3 | 3 | 3 | 3 | 3 | 3 | 3 | 3 | 3 |
| | antioxidant *7) | parts by mass | 1 | 1 | 1 | 1 | 1 | 1 | 1 | 1 | 1 | 1 | 1 | 1 | 1 |
| Second- stage kneading | vulcanization accelerator D *8) | parts by mass | 1.5 | 1.5 | 1.5 | 1.5 | 1.5 | 1.5 | 1.5 | 1.5 | 1.5 | 1.5 | 1.5 | 1.5 | 1.5 |
| | vulcanization accelerator CZ *9) | parts by mass | 1.8 | 1.8 | 1.8 | 1.8 | 1.8 | 1.8 | 1.8 | 1.8 | 1.8 | 1.8 | 1.8 | 1.8 | 1.8 |
| | sulfur | parts by mass | 1.5 | 1.5 | 1.5 | 1.5 | 1.5 | 1.5 | 1.5 | 1.5 | 1.5 | 1.5 | 1.5 | 1.5 | 1.5 |
| Compoundin g property (initial) | tensile product | INDEX | 115 | 112 | 106 | 108 | 118 | 109 | 119 | 107 | 103 | 114 | 110 | 117 | 122 |
| | 3%tanδ@50°C | INDEX | 125 | 105 | 99 | 100 | 130 | 101 | 99 | 93 | 92 | 110 | 115 | 93 | 97 |
| | 0°Ctanδ | INDEX | 97 | 97 | 101 | 99 | 100 | 102 | 95 | 95 | 94 | 93 | 93 | 105 | 138 |
| | DIN abrasion | INDEX | 124 | 105 | 104 | 101 | 127 | 109 | 121 | 107 | 106 | 118 | 120 | 95 | 106 |
| Compoundin g property (90 days after) | tensile product | INDEX | 114 | 111 | 100 | 109 | 116 | 107 | 116 | 105 | 105 | 113 | 108 | 116 | 121 |
| | 3%tanδ@50°C | INDEX | 124 | 105 | 95 | 99 | 128 | 100 | 96 | 92 | 92 | 109 | 113 | 93 | 96 |
| | 0°Ctanδ | INDEX | 96 | 98 | 97 | 98 | 99 | 100 | 93 | 95 | 94 | 93 | 92 | 105 | 137 |
| | DIN abrasion | INDEX | 120 | 104 | 100 | 101 | 125 | 106 | 118 | 105 | 104 | 115 | 118 | 94 | 104 |

**[Table 7]**

| <Production of compounded product Q> | | | Comparativ e Example 10 | Comparativ e Example 11 | Comparativ e Example 12 | Comparativ e Example 13 | Comparativ e Example 14 | Comparativ e Example 15 | Comparativ e Example 16 | Comparativ e Example 17 | Comparativ e Example 18 |
|---|---|---|---|---|---|---|---|---|---|---|---|
| Name of compounded product Q | | | Q26 | Q27 | Q28 | Q29 | Q30 | Q31 | Q32 | Q33 | Q34 |
| First-stagekneading | polymer composition | type | P24 | P25 | P26 | P27 | P28 | P29 | P30 | P31 | P32 |
| | | parts by mass | 70 | 70 | 70 | 70 | 70 | 70 | 87.5 | 87.5 | 70 |
| | butadiene rubber *1) | parts by mass | 30 | 30 | 30 | 30 | 30 | 30 | 30 | 30 | 30 |
| | natural rubber | parts by mass | 0 | 0 | 0 | 0 | 0 | 0 | 0 | 0 | 0 |
| | resin *2) | parts by mass | 0 | 0 | 0 | 0 | 0 | 0 | 0 | 0 | 0 |
| | silica *3) | parts by mass | 70 | 70 | 70 | 70 | 70 | 70 | 70 | 70 | 70 |
| | carbon black *4) | parts by mass | 5 | 5 | 5 | 5 | 5 | 5 | 5 | 5 | 5 |
| | silane *5) coupling agent | parts by mass | 5.6 | 5.6 | 5.6 | 5.6 | 5.6 | 5.6 | 5.6 | 5.6 | 5.6 |
| | extender oil *6) | parts by mass | 30 | 30 | 30 | 30 | 30 | 30 | 12.5 | 12.5 | 30 |
| | stearic acid | parts by mass | 2 | 2 | 2 | 2 | 2 | 2 | 2 | 2 | 2 |
| | zinc oxide | parts by mass | 3 | 3 | 3 | 3 | 3 | 3 | 3 | 3 | 3 |
| | antioxidant *7) | parts by mass | 1 | 1 | 1 | 1 | 1 | 1 | 1 | 1 | 1 |
| Second-stage kneading | vulcanization accelerator D *8) | parts by mass | 1.5 | 1.5 | 1.5 | 1.5 | 1.5 | 1.5 | 1.5 | 1.5 | 1.5 |
| | vulcanization accelerator CZ *9) | parts by mass | 1.8 | 1.8 | 1.8 | 1.8 | 1.8 | 1.8 | 1.8 | 1.8 | 1.8 |
| | sulfur | parts by mass | 1.5 | 1.5 | 1.5 | 1.5 | 1.5 | 1.5 | 1.5 | 1.5 | 1.5 |
| Compoundin g property (initial) | tensile product | INDEX | 100 | 102 | 104 | 98 | 110 | 113 | 90 | 100 | 109 |
| | 3%tanδ@50°C | INDEX | 100 | 100 | 106 | 95 | 120 | 125 | 95 | 94 | 105 |
| | 0°Ctanδ | INDEX | 100 | 100 | 103 | 100 | 97 | 98 | 90 | 95 | 96 |
| | DIN abrasion | INDEX | 100 | 99 | 105 | 95 | 118 | 105 | 65 | 102 | 115 |
| Compoundin g property (90 days after) | tensile product | INDEX | 91 | 93 | 100 | 94 | 87 | 108 | 82 | 90 | 90 |
| | 3%tanδ@50°C | INDEX | 90 | 90 | 103 | 92 | 93 | 119 | 90 | 86 | 90 |
| | 0°Ctanδ | INDEX | 100 | 98 | 104 | 99 | 99 | 97 | 78 | 94 | 95 |
| | DIN abrasion | INDEX | 90 | 92 | 99 | 93 | 87 | 101 | 43 | 92 | 89 |

Details of the components in Tables 5 to 7 are as follows.
*1) "BR01" (product of ENEOS Material)
*2) C5 resin, "RA100" (product of ENEOS)
*3) "ZEOSIL 1165MP" (product of Evonik)
*4) "DIABLACK N330" (product of Mitsubishi Chemical Group Corporation)
*5) "Si75" (product of Evonik)
*6) Process oil T-DAE (product of ENEOS)
*7) "OZONONE 6C" (product of Seiko Chemical Co., Ltd.)
*8) "Nocceler D" (product of Ohuchi Shinko Chemical Industrial Co., Ltd.)
*9) "Nocceler DZ-G" (product of Ohuchi Shinko Chemical Industrial Co., Ltd.)

As is clear from Tables 5 to 7, in Examples 24 to 48, in which cross-linked products were yielded from the polymer compositions P1 to P23 each containing the modified conjugated diene-based polymer (A) and the acid component (B), excellent tensile characteristics, low fuel consumption, excellent wet grip performance, and excellent wear resistance were achieved. In addition, a change in physical property after storage for a long period of time was not substantial, providing excellent stability over time.

In contrast, as compared with Example 24, a considerable change in physical property after storage for a long period of time was observed, providing poor stability over time, in Comparative Example 10, in which a polymer composition and a cross-linked product were yielded in the same manner as employed in Example 24, except that the acid component (B) was not added; in Comparative Example 11, in which the amount of the acid component (B) in the polymer composition was as small as 0.05 parts by mass; and, in Comparative Example 13, in which a polymer composition and a cross-linked product were yielded through addition of 1-decanol instead of the acid component (B). Also, as compared with the corresponding Examples, a considerable change in physical property after storage for a long period of time was observed, in Comparative Example 14, in which a polymer composition and a cross-linked product were yielded in the same manner as employed in Example 36, except that the acid component (B) was not added; and in Comparative Example 12, in which a polymer composition and a cross-linked product were yielded in the same manner as employed in Example 37, except that the acid component (B) was not added. Further, in Comparative Examples 16 to 18, in which a modified conjugated diene-based polymer was produced through continuous polymerization, similarly, a change in physical property after storage for a long period of time was inferior to that observed in the Examples.

## Claims

1. A polymer composition comprising:
a modified conjugated diene-based polymer; and
an acid component, and
comprising, as an optional component, one or both of a non-ionic surfactant and an extender oil, and
wherein the acid component is an acid or a metal salt of an acid or both;
the acid component content, with respect to 100 parts by mass of the modified conjugated diene-based polymer, is 0.1 to 20 parts by mass;
the non-ionic surfactant content, with respect to 100 parts by mass of the modified conjugated diene-based polymer, is 0 to 5 parts by mass;
the extender oil content, with respect to 100 parts by mass of the modified conjugated diene-based polymer, is 0 to 50 parts by mass;
the total amount of the modified conjugated diene-based polymer, the acid component, the non-ionic surfactant, and the extender oil, with respect to the entire composition, is 95 mass% or more; and
the modified conjugated diene-based polymer comprises a partial structure derived from a compound (M) comprising a nitrogen-containing group and two or more hydrocarbyloxysilyl groups.

2. The polymer composition according to claim 1, wherein the nitrogen-containing group is at least one species selected from the group consisting of a protected primary amino group, a protected secondary amino group, a tertiary amino group, an imino group, and an imidazolyl group.

3. The polymer composition according to claim 1, wherein the modified conjugated diene-based polymer comprises a partial structure derived from the compound (M), and a plurality of conjugated diene-based polymer chains bound to the partial structure derived from the compound (M).

4. The polymer composition according to claim 3, wherein an end of at least a part of the plurality of conjugated diene-based polymer chains comprises a partial structure derived from a nitrogen-containing compound.

5. The polymer composition according to claim 1, wherein the acid comprising the acid component has a pH at 20°C of 2 to 5.

6. The polymer composition according to claim 1, wherein the acid component has a solubility in cyclohexane at 25°C of 1.0 g/L or higher.

7. The polymer composition according to claim 1, wherein the acid comprising the acid component is an organic acid.

8. The polymer composition according to claim 1, which composition comprises the non-ionic surfactant in an amount of 0.1 parts by mass to 5 parts by mass, with respect to 100 parts by mass of the modified conjugated diene-based polymer.

9. A compounded product comprising the polymer composition according to any one of claims 1 to 8, and a filler.

10. The compounded product according to claim 9, further comprising a resin.

11. A cross-linked product formed by cross-linking the compounded product according to claim 9.

12. A tire comprising a tread or a sidewall or both,
wherein the tread or the sidewall or both are formed by use of the compounded product according to claim 9.

13. A method for producing a polymer composition, the method comprising:
a step of mixing a modified conjugated diene-based polymer with an acid component, at a ratio of 0.1 to 20 parts by mass of the acid component with respect to 100 parts by mass of the modified conjugated diene-based polymer, in an organic solvent, to thereby yield a mixture; and
a step of removing solvent from the mixture,
wherein the acid component is an acid or a metal salt of the acid or both; and
the modified conjugated diene-based polymer comprises a partial structure derived from a compound (M) comprising a nitrogen-containing group and two or more hydrocarbyloxysilyl groups.

14. The method for producing the polymer composition according to claim 13, the method further comprising:
a step of polymerizing a monomer comprising a conjugated diene compound in the presence of at least one species selected from the group consisting of an alkali metal compound and an alkaline earth metal compound, to thereby yield a conjugated diene-based polymer comprising an active end; and
a step of reacting the conjugated diene-based polymer comprising the active end, with a compound (M) comprising one or more nitrogen-containing groups selected from the group consisting of a protected primary amino group, a protected secondary amino group, a tertiary amino group, an imino group, and an imidazolyl group, and two or more hydrocarbyloxysilyl groups, to thereby yield the modified conjugated diene-based polymer.
